# NEUE EUROPÄISCHE PATENTSCHRIFT

(11) **EP 3 416 408 B2**
(45) Veröffentlichungstag und Bekanntmachung des Hinweises auf die Entscheidung über den Einspruch: **09.08.2023**
(45) Hinweis auf die Patenterteilung: 02.12.2020
(21) Anmeldenummer: 18177218.7
(22) Anmeldetag: 12.06.2018
(51) Int. Cl.: H04R 3/00, B60Q 5/00, F41H 7/02, H04S 7/00

(54) **FAHRZEUG MIT EINEM FAHRZEUGINNENRAUM UND VERFAHREN ZUR GERÄUSCHÜBERTRAGUNG IN EINEN FAHRZEUGINNENRAUM EINES FAHRZEUGS**
VEHICLE WITH AN INTERIOR AND METHOD FOR SOUND TRANSMISSION INTO A VEHICLE INTERIOR OF A VEHICLE
VÉHICULE DOTÉ D'UN HABITACLE DE VÉHICULE ET PROCÉDÉ DE TRANSMISSION DES BRUITS DANS UN HABITACLE DE VÉHICULE D'UN VÉHICULE

(30) Priorität: 13.06.2017 DE 102017112966
(43) Veröffentlichungstag der Anmeldung: 19.12.2018
(73) Patentinhaber: Krauss-Maffei Wegmann GmbH & Co. KG, 80997 München (DE)
(72) Erfinder: Apel, Sebastian, 34127 Kassel (DE)
(74) Vertreter: Feder Walter Ebert

(56) Entgegenhaltungen:
- EP-A2- 2 876 639
- EP-B1- 0 684 485
- WO-A1-2012/097150
- WO-A1-2016/118656
- WO-A1-2016/118656
- WO-A2-2012/097148
- DE-A1- 4 416 122
- DE-A1- 4 416 122
- DE-A1-102009 012 242
- DE-A1-102009 018 468
- DE-A1-102012 218 482
- DE-A1-102012 218 482
- DE-A1-102013 204 798
- DE-A1-102014 221 301
- DE-A1-102014 226 026
- DE-A1-102015 015 130
- DE-A1-102015 221 361
- DE-A1-102016 012 714
- DE-C2- 3 116 586
- US-A1- 2009 120 273
- US-A1- 2009 120 273
- US-A1- 2013 192 451
- US-B2- 9 014 392
- Andrew White: "Fighting fire with fire: technology finds a solution to sniper attacks", Jane's International Defence Review, June 2009 (2009-06), pages 52-57,
- GUNNAR BECKER et al.: "Passive sensing with acoustics on the battlefield", Applied Acoustics, vol. 59, no. 2, February 2000 (2000-02), pages 149-178,
- Duckworth Gregory L., Gilbert Douglas C., Barger James E.: "Acoustic counter-sniper system", Proceedings of SPIE, SPIE, 1000 20th St. Bellingham WA 98225-6705 USA, vol. 2938, 18 February 1997 (1997-02-18), pages 262-275, 1000 20th St. Bellingham WA 98225-6705 USA ISSN: 0277-786X, DOI: 10.1117/12.266747 ISBN: 978-1-5106-4548-6
- Anonymous: "Kampfpanzer", Wikipedia, 26 July 2021 (2021-07-26), Retrieved from the Internet: URL:https://de.wikipedia.org/wiki/Kampfpan zer [retrieved on 2021-08-26]

## Beschreibung

Die vorliegende Erfindung betrifft ein Fahrzeug gemäß dem Anspruch 1. Außerdem betrifft die Erfindung ein Verfahren zu Geräuschübertragung in einen Fahrzeuginnenraum eines Fahrzeugs gemäß dem Anspruch 13.

Derartige Fahrzeuge werden bevorzugt, jedoch nicht ausschließlich von Sicherheitsbehörden und/oder Militär verwendet. Die Fahrzeuge können für ein insgesamt sehr breites Aufgaben- und Einsatzspektrum vorgesehen werden und entsprechend ausgebildet sein. Beispielhaft seien dabei folgende Ausprägungen gattungsgemäßer Fahrzeuge genannt: Truppentransportfahrzeuge, Kampfpanzer, Schützenpanzer, Spähwagen, Brückenverlegefahrzeuge und Transportfahrzeuge.

Bei derartigen Fahrzeugen ist unter anderem aufgrund der Panzerung sowie der robusten und leistungsstarken Triebwerke oder Antriebsaggregate im jeweiligen Fahrzeuginnenraum ein hohes Maß an akustischer Abschottung von der das Fahrzeug umgebenden Umwelt zu beobachten. Diese akustische Abschottung oder Schallhemmung kann bei Fahrzeugen, bei denen die Fahrzeuginsassen untereinander oder mit extern zum Fahrzeug befindlichen Personen oder Einrichtungen über eine Fahrzeugverständigungsanlage kommunizieren noch erhöht oder verstärkt werden.

Daraus resultiert jedoch die Problematik, dass die Fahrzeuginsassen während ihres Einsatzes in ihrem Situationsbewusstsein einem wesentlichen menschlichen Sinnesorgan und der daraus resultierenden Wahrnehmung mitunter vollständig beraubt werden. Dies bedeutet, dass die Fahrzeuginsassen im schlimmsten Fall keinerlei akustische Informationen aus der Umgebung oder aus der das Fahrzeug umgebenden Umwelt wahrnehmen und in die Situationsbewertung mit einfließen lassen können, so dass ihr Situationsbewusstsein unter dem teilweise vollständigen Ausschluss akustischer Informationen zustande kommt. Besonders gravierend ist dieses Problem darüber hinaus für solche Fahrzeuge, bei denen beispielsweise aufgrund eines besonders hohen Maßes an Panzerung des Fahrzeugs, auch andere für das Situationsbewusstsein wichtige Sinneseinflüsse beispielsweise die optische Wahrnehmung nur eingeschränkt oder indirekt zur Verfügung stehen.

Die WO 2016/118656 A1 und die DE 10 2012 218 482 A2 zeigen jeweils ein Fahrzeug mit mindestens zwei Mikrofonen zum Empfang von Umweltgeräuschen und zumindest einem Lautsprecher zur Übertragung von Umweltgeräuschen aus der Umgebung des Fahrzeugs in den Fahrzeuginnenraum. Die US 2009/120273 A1 offenbart ein militärisches Fahrzeug mit einer Außensprechanlage.

Die **Aufgabe** der vorliegenden Erfindung besteht darin, die oben genannten Probleme des Standes der Technik zu überwinden, insbesondere besteht die Aufgabe darin, das Situationsbewusstsein von Fahrzeuginsassen in einem Fahrzeuginnenraum eines Fahrzeugs zu verbessern.

Diese Aufgabe wird bei einem Fahrzeug der eingangs genannten Art mit den Merkmalen des Anspruch 1 **gelöst**.

Das Fahrzeug umfasst mindestens zwei Mikrofone zum Empfang von Umweltgeräuschen und zumindest einen Lautsprecher zur Übertragung von Umweltgeräuschen aus der Umgebung des Fahrzeugs in den Fahrzeuginnenraum. Dadurch wird ermöglicht, dass die Fahrzeuginsassen auch das akustische Geschehen in der Umwelt des Fahrzeugs in ihrer Situationsbewertung berücksichtigen und dementsprechend im Einsatz fundiertere und damit sicherere und bessere Entscheidungen aufgrund des verbesserten Situationsbewusstseins treffen können.

In einer ersten vorteilhaften Ausführungsform des Fahrzeugs ist vorgesehen, dass die mindestens zwei Mikrofone und der zumindest eine Lautsprecher zur lagerichtigen Übertragung von Umweltgeräuschen in den Fahrzeuginnenraum eingerichtet sind. Durch eine lagerichtige Übertragung der Umweltgeräusche wird das Situationsbewusstsein der Fahrzeuginsassen in erheblichem Maße verbessert. Denn grundsätzlich, in besonderem Maße jedoch auch in Fahrzeugen als sich bewegende Objekte, ist die mit dem Hören oder dem Wahrnehmen von akustischen Informationen verbundene Möglichkeit der räumlichen Wahrnehmung eine besonders wichtige Komponente, die zu einem Großteil zur richtigen oder korrekten Interpretation der akustischen Information und zur Ableitung entsprechender Entscheidungen beiträgt.

Um die lagerichtige Übertragung von Umweltgeräuschen in den Fahrzeuginnenraum oder das Fahrzeuginnere über die mindestens zwei Mikrofone und den zumindest einen Lautsprecher zu gewährleisten, ist dabei zunächst grundsätzlich notwendig, dass durch die Mikrofone eine Diskriminierung nach Ursprungsrichtung der Umweltgeräusche ermöglicht wird. Gleichermaßen ist für den zumindest einen Lautsprecher erforderlich, dass eine entsprechend variable Ausgabe der übertragenden Umweltgeräusche erfolgen kann, so dass die lagerichtige Übertragung überhaupt gewährleistet werden kann.

Nachfolgend werden verschiedene Einzelheiten des erfindungsgemäßen Fahrzeugs näher erläutert, die sich mit vorteilhaften Ausgestaltungen für einen möglichst optimalen Empfang der Umweltgeräusche beschäftigen.

Dabei kann vorgesehen sein, dass die mindestens zwei Mikrofone an einer Fahrzeugaußenkontur angeordnet sind. Dadurch wird eine möglichst unmittelbare Aufnahme oder ein möglichst unmittelbarer Empfang der Umweltgeräusche gewährleistet.

Das Fahrzeug weist mindestens zwei, insbesondere vier Mikrofone auf. Die Erhöhung der Anzahl der Mikrofone kann, je nach Ausgestaltung der Mikrofone, bis zu einem gewissen Grad den Empfang von Umweltgeräuschen, insbesondere die Möglichkeit für einen lagerichtigen Empfang der Umweltgeräusche, verbessern. Denn über mehrere Mikrofone lassen sich die räumlichen Komponenten der Umweltgeräusche insgesamt besser empfangen.

Außerdem kann besonders vorteilhaft vorgesehen werden, dass zwischen den zwei oder mehr Mikrofonen jeweils ein möglichst großer räumlicher Abstand ausgebildet wird. Dabei kann, insbesondere bei der Anordnung der Mikrofone auf der Fahrzeugaußenkontur, die jeweilige Form der Fahrzeugaußenkontur ausgenutzt werden, um eine Anordnung der zwei oder mehr Mikrofone zu gewährleisten, die einerseits einen möglichst guten Empfang von Umweltgeräuschen, also einen qualitativ hochwertigen Empfang von Umweltgeräuschen und anderseits einen möglichst großen Abstand zu den jeweils anderen oder nächstliegenden Mikrofonen gewährleistet.

Die Mikrofone können in vorteilhafter Weise als Rundum-Mikrofone ausgestaltet sein, die Umweltgeräusche aus einem großen Raumwinkel oder gar aus einem Vollkreis oder einer Vollkugel um das Mikrofon empfangen. Die Mikrofone können jedoch auch als Richtmikrofone ausgestattet sein, die nur einen verhältnismäßig kleinen Raumwinkel abdecken, aus dem Umweltgeräusche empfangen werden können. Bei der Verwendung von zwei oder mehr Mikrofonen können jedoch auch beide Typen von Mikrofonen sowie weitere Zwischenformen miteinander kombiniert werden.

Ziel der jeweiligen Ausgestaltung der Mikrofone sowie dessen oder deren Anordnung ist dabei in erster Linie eine qualitativ hochwertige Übertragung der Umweltgeräusche in den Fahrzeuginnenraum zu ermöglichen. Darüber hinaus kann die Ausbildung und Anordnung der Mikrofone auch zum lagerichtigen Empfang der Umweltgeräusche dienen, der die Voraussetzung für eine lagerichtige Übertragung der Umweltgeräusche in den Fahrzeuginnenraum über den zumindest einen Lautsprecher darstellt.

Dementsprechend sieht eine weitere, besonders vorteilhafte Ausführungsform des Fahrzeugs vor, dass die Mikrofone so ausgerichtet sind, dass Umweltgeräusche aus unterschiedlichen Richtungen von unterschiedlichen Mikrofonen unterschiedlich empfangen werden. Dadurch wird ermöglicht, dass unterschiedliche Umweltgeräusche entsprechend ihrer Lage in der Umgebung des Fahrzeugs bzw. in der Umwelt des Fahrzeugs entsprechend differenziert empfangen werden können, so dass basierend darauf eine lagerichtige Übertragung der Umweltgeräusche in das Innere des Fahrzeugs, also in den Fahrzeuginnenraum, ermöglicht wird.

Ein unterschiedlicher Empfang von Umweltgeräuschen kann dabei einen Unterschied im Zeitpunkt des Empfangs, also einen Laufzeitunterschied bedeuten. Gleichermaßen kann der unterschiedliche Empfang auch durch eine unterschiedliche Amplitude oder Intensität des empfangenen Signals resultieren. Darüber hinaus können auch nicht lineare Effekte, wie beispielsweise eine Dispersion eines Wellenpakets, die Grundlage für einen unterschiedlichen Empfang von Umweltgeräuschen mit unterschiedlichen Mikrofonen bilden.

In einer weiteren, besonders vorteilhaften Ausführungsform der Erfindung kann vorgesehen sein, dass das Fahrzeug zumindest ein Störgeräusch-Mikrofon zum Empfang von Fahrzeuggeräuschen des Fahrzeugs und/oder anderen Störgeräuschen aufweist. Gerade wenn die oben beschriebenen Fahrzeuge sich in Bewegung befinden, erzeugen diese ein mitunter hohes Maß an Schallemissionen, die sich ihrerseits mit den Umweltgeräuschen aus der Umwelt des Fahrzeugs überlagern. Da es wünschenswert ist, die Umweltgeräusche des Fahrzeugs ohne diese Eigengeräuschkulisse von Fahrzeuggeräuschen oder anderen vergleichbaren Störgeräuschen wahrzunehmen, ist es besonders vorteilhaft, diese Geräusche gezielt zu empfangen oder aufzunehmen, um sie bei der Geräuschübertragung in den Fahrzeuginnenraum und der dortigen Ausgabe über den zumindest einen Lautsprecher unterdrücken oder ausfiltern zu können.

Dies wird durch einen Störgeräusch-Mikrofon ermöglicht. Das Störgeräusch-Mikrofon kann dabei zusätzlich zu den mindestens zwei Mikrofonen zum Empfang von Umweltgeräuschen ausgebildet sein. Alternativ kann auch zumindest ein Mikrofon zum Empfang von Umweltgeräuschen gleichzeitig als Störgeräusch-Mikrofon zum Einsatz kommen. Bei der zusätzlichen Anordnung von Störgeräusch-Mikrofonen kann vorgesehen sein, dass diese an Orten angeordnet sind, in der Umgebung die Fahrzeuggeräusche und/oder Störgeräusche entstehen. So könnte beispielsweise vorgesehen sein, dass ein Störgeräusch-Mikrofon in der Nähe des Triebwerks oder Antriebsaggregats angeordnet ist. Sollte es sich bei dem Fahrzeug um ein Kettenfahrzeug handeln, so könnte beispielsweise ein Störgeräusch-Mikrofon im Bereich der Ketten angeordnet sein, um die dort entstehenden Fahrzeugeigengeräusche zu empfangen.

Nachfolgend werden verschiedene Einzelheiten des erfindungsgemäßen Fahrzeugs näher beschrieben, die die Ausgestaltung des zumindest einen Lautsprechers betreffen.

Zunächst kann dabei vorteilhaft vorgesehen sein, dass der zumindest eine Lautsprecher im Fahrzeuginnenraum angeordnet ist und zur Ausgabe von Umweltgeräuschen aus der Umgebung des Fahrzeugs eingerichtet ist. Dadurch wird sichergestellt, dass die mit dem zumindest einen Mikrofon empfangenen Umweltgeräusche aus der Umgebung des Fahrzeugs in den Fahrzeuginnenraum übertragen werden und dort zumindest einem Fahrzeuginsassen ausgegeben werden, so dass dieser auch die Umweltgeräusche in seine Situationsbewertung einfließen lassen kann und dementsprechend fundierte Entscheidungen basierend auf einem hohen Maß an Situationsbewusstsein treffen kann.

Außerdem kann besonders vorteilhaft vorgesehen sein, dass der zumindest eine Lautsprecher beweglich gegenüber Teilen des Fahrzeugs ausgebildet ist. Dadurch kann die lagerichtige Übertragung der Umweltgeräusche in den Fahrzeuginnenraum weiter verbessert werden.

Weiterhin hat es sich als vorteilhaft herausgestellt, wenn die Stellung des Lautsprechers gegenüber Teilen des Fahrzeugzeugs bei der lagerichtigen Übertragung berücksichtigt wird. Für die lagerichtige Übertragung kann so nicht nur die Stellung des Fahrzeugs relativ zu der Geräuschquelle berücksichtigt werden, sondern auch die Stellung des Lautsprechers relativ zur Geräuschquelle. Die Stellung des Lautsprechers kann durch eine Bewegung des Lautsprechers gegenüber Teilen des Fahrzeugs verändert werden. Besonders vorteilhaft kann vorgesehen sein, dass der zumindest eine Lautsprecher insgesamt unabhängig von den sonstigen Teilen des Fahrzeugs bewegt werden kann. Alternativ kann jedoch auch vorgesehen sein, dass der zumindest eine Lautsprecher beispielsweise über eine Kabelverbindung mit Teilen des Fahrzeugs verbunden ist und die Beweglichkeit des zumindest einen Lautsprechers gegenüber Teilen des Fahrzeugs durch die Kabelverbindung beschränkt oder gehemmt wird. Außerdem kann auch vorgesehen sein, dass der zumindest eine Lautsprecher beweglich gegenüber einem Teil des Fahrzeugs, aber gleichzeitig unbeweglich gegenüber anderen Teilen des Fahrzeugs angeordnet ist. Insbesondere kann vorgesehen sein, dass der zumindest eine Lautsprecher gegenüber dem Fahrzeuginnenraum beweglich ausgebildet ist.

Besonders vorteilhaft ist eine Ausgestaltung des Fahrzeugs, bei der der zumindest eine Lautsprecher zusammen mit einem Kopf eines Fahrzeuginsassen bewegbar ist. Dadurch kann einerseits erreicht werden, dass ein besonders effektives Ausgeben der Umgebungsgeräusche an den Fahrzeuginsassen oder eine besonders effektive Übertragung der Umweltgeräusche erfolgt, da der zumindest eine Lautsprecher in diesen Fall so ausgeführt sein kann, dass er sich so gut wie immer im Bereich der Ohren eines Fahrzeuginsassen befindet. Außerdem kann dadurch, zusammen mit einer im weiteren Verlauf der vorliegenden Beschreibung noch näher erläuterten Ausgestaltung des Fahrzeugs, erreicht werden, dass eine lagerichtige Übertragung der Umweltgeräusche und eine lagerichtige Wahrnehmung der Umweltgeräusche für oder an den Fahrzeuginsassen jederzeit, insbesondere unabhängig von der Position oder Bewegung des Kopfes eines Fahrzeuginsassen ermöglicht wird.

In diesem Zusammenhang wird nachfolgend eine weitere, besonders bevorzugte Ausgestaltung beschrieben, die die lagerichtige Wahrnehmung der Umweltgeräusche durch einen Fahrzeuginsassen im Fahrzeuginnenraum des Fahrzeugs ermöglichen oder verbessern soll, unabhängig davon, wo der Fahrzeuginsasse im Fahrzeuginnenraum angeordnet ist und unabhängig davon, wie der Fahrzeuginsasse bezüglich des Fahrzeugs ausgerichtet ist oder sich bewegt.

Diese Ausführungsform sieht vor, dass das Fahrzeug zumindest einen Bewegungssensor zur Ermittlung der Bewegung eines Fahrzeuginsassen, insbesondere zur Ermittlung der Bewegung eines Kopfes eines Fahrzeuginsassen umfasst. Mit einem derartigen Bewegungssensor, der beispielsweise als Trägheitssensor oder Kreiselsensor ausgebildet sein kann, kann erreicht werden, dass der Bewegungszustand, insbesondere des Kopfes, jederzeit feststellbar ist und eine entsprechend an den Bewegungszustand angepasste Übertragung der Umweltgeräusche in den Fahrzeuginnenraum erfolgen kann, so dass eine lagerichtige Wahrnehmung jederzeit und in jeden Bewegungszustand erreicht wird.

Gemäß einer weiteren, besonders vorteilhaften Ausführungsform, kann vorgesehen sein, dass der zumindest eine Lautsprecher, zusammen mit einer Sichteinrichtung zur optischen Wahrnehmung von zumindest einem Teil der Umgebung des Fahrzeugs, bewegbar ist. Diese Ausgestaltung hat den Vorteil, dass die optische Sinneswahrnehmung sowie die akustische Sinneswahrnehmung sehr realitätsnah miteinander verknüpft bzw. im Einklang miteinander gebracht werden.

Beispielsweise kann durch eine lagerichtige Übertragung von Umweltgeräuschen in den Fahrzeuginnenraum bei einer gleichzeitigen Kopplung der Bewegung des zumindest einen Lautsprechers an die Bewegung einer Sichteinrichtung zur optischen Wahrnehmung der Umgebung ermöglicht werden, dass die akustische Übertragung von Umweltgeräuschen die optische Inspektion der Umgebung des Fahrzeugs durch die Sichteinrichtung des Fahrzeugs führt oder bedingt oder als Rückkopplung dient. Dies bedeutet, dass der Fahrzeuginsasse, der eine entsprechende Sichteinrichtung mit einem bewegungsgekoppelten Lautsprecher bedient, die lagerichtig übertragenen Umweltgeräusche zur Ausrichtung der Sichteinrichtung heranziehen kann.

Beispielsweise kann ein lagerichtig mittels des zumindest einen Lautsprechers übertragenes Umweltgeräusch eines sich nähernden anderen Fahrzeugs aus einer bestimmten Richtung zum Anlass genommen werden, die Sichteinrichtung des Fahrzeugs entsprechend auszurichten oder zu positionieren. Dabei hat die besagte Ausführungsform den Vorteil, dass für den Fall, dass auch bei einer Bewegung des zumindest einen Lautsprechers eine jeweils lagerichtige Übertragung der Umweltgeräusche in den Fahrzeuginnenraum erfolgt, eine veränderte Übertragung oder Ausgabe der Umweltgeräusche mittels des zumindest einen Lautsprechers als akustische Rücckopplung für die Ausrichtung oder Einstellung der Sichteinrichtung des Fahrzeugs dienen kann. Dies bedeutet, dass der Fahrzeuginsasse in einer sehr intuitiven Art und Weise das Sichtfeld der Sichteinrichtung an die akustisch empfangenen Informationen anpassen kann, um Informationen über seine Umwelt oder Umgebung zu erhalten, zu verifizieren und/oder zu präzisieren.

Die oben beschriebene Ausgestaltung betrifft Sichteinrichtungen, bei denen sich der Bediener bei einer Anpassung und der Ausrichtung der Sichteinrichtung oder des Sichtfelds der Sichteinrichtung zusammen mit der Sichteinrichtung bewegt. Es sind in moderneren Fahrzeugen jedoch auch Sichteinrichtungen bekannt, bei denen das Sichtfeld oder die Ausrichtung der Sichteinrichtung unabhängig von der Position eines Bedieners verändert wird und das veränderte Sichtfeld lediglich über eine Anzeigeeinheit dargestellt wird.

Folglich kann alternativ oder zusätzlich zu einer Bewegung des zumindest einen Lautsprechers zusammen mit einer Sichteinrichtung eines Fahrzeugs auch vorgesehen sein, dass eine virtuell lagerichtige Übertragung der Umweltgeräusche mit dem zumindest einen Lautsprecher erfolgt, die in Abhängigkeit einer Ausrichtung einer Sichteinrichtung erfolgt. Dies bedeutet, dass die virtuell lagerichtige Geräuschübertragung auch dann als Rückkopplung für die Anpassung der optischen Wahrnehmung mittels der Sichteinrichtung dienen kann, wenn der Bediener der Sichteinrichtung lediglich die Ausgabe auf einer unbeweglichen Anzeigeeinheit betrachtet. Dazu kann ebenfalls ein Bewegungssensor vorgesehen sein, der die Lage oder Ausrichtung der Sichteinrichtung ermittelt. Die virtuell lagerichtige Übertragung der Umweltgeräusche mit dem zumindest einen Lautsprecher wird dann über im Folgenden noch eingehender beschriebene Signalverarbeitungseinheit generiert. Eine virtuell lagerichtige Übertragung kann demnach von einer tatsächlich lagerichtigen Übertragung abweichen, wobei eine bezogen auf die Ausrichtung der Sichteinrichtung die Lagerichtigkeit bei der virtuell lagerichtigen Übertragung erhalten bleibt.

Eine weitere, besonders vorteilhafte Ausgestaltung des Fahrzeuges kann vorsehen, dass mehrere Lautsprecher vom Fahrzeug umfasst sind, die jeweils zur lagerichtigen Ausgabe von Umweltgeräuschen eingerichtet sind. Dabei sind grundsätzlich Ausgestaltungen möglich, in denen die mehreren Lautsprecher so im Fahrzeuginnenraum angeordnet sind, dass einem, mehreren oder allen Fahrzeuginsassen die Umweltgeräusche wahrnehmbar gemacht werden. Dazu kann beispielsweise vorgesehen sein, dass die Lautsprecher über den Fahrzeuginnenraum oder ein Abteil des Fahrzeuginnenraums verteilt angeordnet sind und die Anordnung der Lautsprecher einen Raum-Klang-Effekt (Surround-Sound) erzeugen, so dass eine lagerichte Übertragung der Umweltgeräusche in den Fahrzeuginnenraum oder in einem Abteil des Fahrzeuginnenraums ermöglicht wird und von einem oder mehreren in dem Fahrzeuginnenraum befindlichen Fahrzeuginsassen wahrgenommen werden kann.

Die Ausgestaltung des Fahrzeugs mit mehreren Lautsprechern, die jeweils zur lagerichtigen Ausgabe von Umweltgeräuschen eingerichtet sind, kann jedoch auch vorsehen, dass jeder Lautsprecher an sich und einzeln bereits zur lagerichtigen Ausgabe von Umweltgeräuschen eingerichtet ist und damit als persönlicher Lautsprecher ausgestaltet ist, der jeweils einem Fahrzeuginsassen im Fahrzeuginnenraum die Wahrnehmung von lagerichtig aus der Umgebung des Fahrzeugs genen Umweltgeräuschen ermöglicht.

Erfindungsgemäß ist vorgesehen, dass der zumindest eine Lautsprecher zwei Ausgabeeinheiten aufweist. Beispielsweise kann der zumindest eine Lautsprecher als Stereolautsprecher ausgebildet mit zwei unterschiedlich angesteuerten Ausgabeeinheiten sein, so dass eine Richtungsunterscheidung oder Direktionalität, bei den in den Fahrzeuginnenraum übertragenen Umweltgeräuschen erreicht werden kann.

Besonders vorteilhaft können die Lautsprecher als Kopfhörer oder Ohrhörer ausgebildet sein, insbesondere Kopfhörer oder Ohrhörer mit zwei Ausgabeeinheiten, die jedem Fahrzeuginsassen des Fahrzeuginnenraums die Wahrnehmung von lagerichtig übertragenen Umweltgeräuschen ermöglichen.

Gemäß einer weiteren Weiterbildung des erfindungsgemäßen Fahrzeugs kann vorgesehen sein, dass der zumindest eine Lautsprecher Teil einer Fahrzeugverständigungsanlage ist. Dies hat den Vorteil, dass über den Lautsprecher nicht nur Umweltgeräusche, gegebenenfalls lagerichtig, an die Fahrzeuginsassen im Fahrzeuginnenraum des Fahrzeugs übertragen werden können, sondern auch, dass eine Verständigung von Fahrzeuginsassen untereinander oder mit externen Kommunikationspartnern über oder mit demselben Lautsprecher erfolgen kann. Dazu können die Signale einer Fahrzeugverständigungsanlage mit den Signalen zur Übertragung der Umweltgeräusche überlagert werden und mittels des zumindest einen Lautsprechers ausgegeben werden. In dieser Ausgestaltung kann dementsprechend auch vorgesehen sein, dass die Signalverarbeitungseinheit zur Kombination von Signalen zur Übertragung von Umweltgeräuschen und Signalen einer Fahrzeugverständigungsanlage eingerichtet ist.

Nachfolgend werden Einzelheiten des erfindungsgemäßen Fahrzeugs beschrieben, die die Einzelheiten der Übertragung, insbesondere der lagerichtigen Übertragung der Umweltgeräusche in den Fahrzeuginnenraum des Fahrzeugs betreffen.

Dazu kann in einer ersten vorteilhaften Ausgestaltung vorgesehen sein, dass das Fahrzeug eine Signalverarbeitungseinheit umfasst, die zur Verarbeitung von Signalen der mindestens zwei Mikrofone eingerichtet ist. Gemäß einer besonders vorteilhaften Ausgestaltung kann vorgesehen sein, dass die Signalverarbeitungseinheit zur Verarbeitung der Signale der Mikrofone in Abhängigkeit der Anordnung der Mikrofone an dem Fahrzeug eingerichtet ist. Dies bedeutet, dass mit der Signalverarbeitungseinheit die empfangenen akustischen Signale so aufgearbeitet oder weiterverarbeitet werden, dass das verarbeitete Signal nach Empfangsrichtungen unterschieden werden kann. Das mit der Signalverarbeitungseinheit aufbereitete Signal stellt also einen Raumklang oder ein zwei- bis dreidimensionales räumliches, akustisches Empfangssignal dar, bei dem gewisse akustische Anteile des Gesamtsignals einer bestimmten Richtung oder einem bestimmten Raumwinkel zugeordnet sind.

Gemäß einer weiteren vorteilhaften Ausführungsform kann zudem vorgesehen sein, dass die Signalverarbeitungseinheit zur Verarbeitung von Signalen der mindestens zwei Mikrofone in Abhängigkeit der Anordnung des zumindest einen Lautsprechers eingerichtet ist. Dies ist, wie oben im Zusammenhang mit den entsprechenden Lautsprechern und deren Ausgestaltungen bereits beschrieben, besonders von Vorteil, wenn persönliche oder individuelle Lautsprecher vorgesehen sind, die für den jeweiligen Fahrzeuginsassen im Fahrzeuginnenraum eine von der jeweiligen Position, Ausrichtung und Bewegung des Fahrzeuginsassen abhängige lagerichtige Übertragung der Umweltgeräusche ermöglicht werden soll. Dies bedeutet, dass mit einer entsprechend eingerichteten Signalverarbeitungseinheit eine Rotation eines empfangenen oder durch die Signalverarbeitungseinheit erzeugten Raumklangs erfolgt, um die Relativanordnung zwischen dem zumindest einen Lautsprecher und der Anordnung der Mikrofone zu kompensieren, so dass unabhängig von einer veränderbaren Anordnung des zumindest einen Lautsprechers eine lagerichtige Übertragung von Umweltgeräuschen erfolgen kann.

Gleichermaßen vorteilhaft kann vorgesehen sein, dass die Signalverarbeitungseinheit zur Verarbeitung von Signalen der mindestens zwei Mikrofone in Abhängigkeit der Anordnung von zumindest einer Sichteinrichtung eingerichtet ist. Dies ermöglicht eine virtuell lagerichtige Übertragung für den Bediener einer entsprechenden Sichteinrichtung, deren Ausgabe über eine unbewegliche Anzeigeeinheit erfolgt.

Gemäß einer weiteren vorteilhaften Ausgestaltung des Fahrzeugs kann vorgesehen sein, dass die Signalverarbeitungseinheit zur Verarbeitung von Signalen von zumindest einem Störgeräusch-Mikrofon eingerichtet ist. Dadurch wird erreicht, dass Störgeräusche aus der Umgebung des Fahrzeugs oder Störgeräusche, die von dem Fahrzeug selbst erzeugt werden, nicht mit anderen Umweltgeräuschen überlagert in den Fahrzeuginnenraum übertragen werden. Vielmehr wird erreicht, dass die von dem zumindest einem Störgeräusch-Mikrofon empfangenen Störgeräusche ausgefiltert oder unterdrückt werden können.

Gemäß einer weiteren vorteilhaften Ausführungsform des Fahrzeugs kann weiter vorgesehen sein, dass das Fahrzeug eine akustische Aufklärungseinrichtung mit mindestens einer akustischen Empfangseinrichtung aufweist und wobei eine akustische Klassifizierungseinrichtung zur Klassifizierung von Objekten durch eine Analyse der mit der zumindest einen Empfangseinrichtung empfangenen akustischen Signale vom Fahrzeug umfasst sind. Die zumindest eine Empfangseinrichtung kann beispielsweise eines der mindestens zwei Mikrofone umfassen. Dadurch wird gewährleistet, dass neben einer Übertragung von Umweltgeräuschen aus der Umgebung in den Fahrzeuginnenraum auch eine Klassifizierung von Umweltgeräuschen und eine entsprechende Zuordnung zu Objekten erfolgen. Diese Eigenschaften können für die Fahrzeuginsassen das Situationsbewusstsein weiter verbessern, da die in den Fahrzeuginnenraum übertragenen Geräusche damit besser eingeordnet werden können. Dies ist insbesondere dann der Fall, wenn eine optische Wahrnehmung der Geräuschquelle nicht oder noch nicht zur Interpretation oder Bestätigung der Umweltgeräusche zur Verfügung steht. Dann kann eine Kenntnis über ein klassifiziertes Objekt den optischen Sinneseindruck ersetzen oder ergänzen.

Nachfolgend werden Ausgestaltungen des Fahrzeugs beschrieben, welches neben der Übertragung von Umweltgeräuschen in den Fahrzeuginnenraum auch eine Klassifizierung von Objekten erlaubt.

Als Beispiele für die zu klassifizierenden Objekte seien hier unterschiedliche Fahrzeuge, unterschiedliche Fahrzeugtypen oder Fahrzeugklassen, unterschiedliche Geschütze oder Waffen, unterschiedliche Antriebssysteme oder Antriebsaggregate genannt. Es können darüber hinaus jedoch auch eine Vielzahl anderer Objekte mittels der Klassifizierungseinrichtung klassifiziert werden. Auch kann vorgesehen sein, dass neben einer Grobklassifizierung nach Objekten auch eine Feinklassifizierung nach Objektzuständen oder Objekteigenschaften erfolgt. So kann beispielsweise eine Klassifizierung als ein bestimmtes Fahrzeug in Fahrt oder als ein bestimmtes Fahrzeug im Stand erfolgen. Dementsprechend umfasst der Begriff des Objekts insofern auch Ereignisse, die von einem Objekt herrühren und die ein akustisches Signal verursachen.

So kann anhand des erfindungsgemäßen militärischen Fahrzeugs beispielsweise ermittelt werden, dass sich ein Fahrzeug, dessen Typ und/oder Klasse bevorzugt oder ausschließlich von feindlichen Truppen benutzt wird, in der Nähe der eigenen Position befindet. Außerdem kann mit der Klassifizierung festgestellt werden, dass die akustischen Signale eines aktuellen Beschusses des militärischen Fahrzeugs von Geschützen oder Waffen von befreundeten Einheiten stammen. In beiden Fällen wird das Situationsbewusstsein erhöht und es können entsprechend fundierte Maßnahmen und/oder Gegenmaßnahmen ergriffen werden.

Als Empfangsrichtungen können beispielsweise Mikrofone dienen. Aber auch andere akustische Empfangseinrichtungen können zum Einsatz kommen. Auf die vorteilhaften Ausgestaltungen der Empfangseinrichtungen wird nachfolgend noch eingegangen werden.

Gemäß einer ersten, besonders vorteilhaften Ausgestaltung des militärischen Fahrzeugs kann vorgesehen sein, dass dieses ein Objektortungsmittel zur Ortung von Objekten durch eine Analyse der mit der zumindest einen Empfangseinrichtung empfangenen akustischen Signale aufweist. Dadurch kann in besonders vorteilhafter Weise das Situationsbewusstsein weiter verbessert werden. Denn durch eine Kombination einer akustischen Klassifizierung von Objekten mittels der Klassifizierungseinrichtung und einer akustischen Ortung mittels des Objektortungsmittels kann nicht nur die Art der akustischen Geräuschquelle und somit die Klasse des entsprechenden Objektes, sondern auch die Richtung und gegebenenfalls die Entfernung, also die Position des entsprechenden Objekts, identifiziert werden. Somit kann für die Fahrzeuginsassen beispielsweise erkennbar werden, ob aufgrund von Richtung und Entfernung eines klassifizierten Objektes, dieses Objekt eine Bedrohung darstellt.

Gemäß einer bevorzugten Ausführungsform des militärischen Fahrzeugs kann vorgesehen sein, dass die zumindest eine akustische Empfangseinrichtung zum Empfang von durch die zu klassifizierenden Objekte erzeugten akustischen Signale eingerichtet ist. Dementsprechend ist die akustische Aufklärungseinrichtung des militärischen Fahrzeugs bevorzugt als passive Aufklärungseinrichtung ausgestaltet, welche nicht aktiv ein Prüf- oder Messsignal von einem Sender aussendet und entsprechende Reflektionen des ausgesandten Signals detektiert, sondern beschränkt sich über die bevorzugte passive Ausgestaltung der Empfangseinrichtung darauf, die von den zu klassifizierenden Objekten erzeugten akustischen Signale zu empfangen.

Diese Ausgestaltung hat den Vorteil, dass das militärische Fahrzeug, im Gegensatz zum Vorsehen eines akustischen Senders, schwerer oder zumindest weniger leicht detektiert und geortet werden kann, da das Aussenden entsprechender Prüf- oder Messsignale immer auch eine Möglichkeit zur Detektion oder Ortung bietet.

Gemäß einer vorteilhaften Weiterbildung des militärischen Fahrzeugs kann vorgesehen sein, dass die zumindest eine akustische Empfangseinrichtung eine Mehrzahl von auf der Außenkontur des Fahrzeugs angeordneten Schallempfängern umfasst. Die Schallempfänger könnten beispielsweise als Mikrofone ausgestaltet sein. Durch die Anordnung von mehreren Schallempfängern auf der Außenkontur des Fahrzeugs kann sowohl die Klassifizierung der Objekte mit der Klassifizierungseinrichtung als auch die Ortung der Objekte mit dem Objektortungsmittel verbessert werden. Dazu kann beispielsweise auch vorgesehen sein, dass die einzelnen Schallempfänger einen möglichst großen Abstand zueinander aufweisen. Deshalb ist die Anordnung der Schallempfänger auf der Fahrzeugaußenkontur besonders vorteilhaft, weil dadurch die jeweils größten Abstände zwischen den einzelnen Schallempfängern realisiert werden können.

Die Analyse der mit den Schallempfängern der Empfangseinrichtung empfangenen akustischen Signale kann dementsprechend eine Auswertung von Laufzeitunterschieden der jeweils von den Schallempfängern oder Mikrofonen empfangenen Signale umfassen. Aber auch andere Unterschiede der jeweiligen akustischen Signale der Schallempfänger kann zur Klassifizierung und/oder Ortung von Objekten herangezogen werden.

Eine weitere bevorzugte Weiterentwicklung des militärischen Fahrzeugs sieht vor, dass die zumindest eine Empfangseinrichtung, insbesondere mehrere Schallempfänger derart angeordnet ist/sind, dass Schallwellen aus der das Fahrzeug umgebenden Atmosphäre empfangen werden. Dies hat den Vorteil, dass aufgrund der stetigen Präsenz der das Fahrzeug umgebenden Atmosphäre auch eine stetige Klassifizierung von Objekten und gegebenenfalls Ortung von Objekten stattfinden kann.

Da jedoch die Klassifizierung und gegebenenfalls Ortung von Objekten anhand von Schallwellen aus der Atmosphäre in der Umgebung des militärischen Fahrzeugs aufgrund der verhältnismäßig geringen Dichte der Atmosphäre als Übertragungsmedium der Schallwellen besondere Anforderungen sowohl an die Empfangseinrichtung als auch an die Klassifizierungseinrichtung und/oder an das Ortungsmittel stellt, kann eine weitere, besonders bevorzugte der zumindest einen Empfangseinrichtung, insbesondere der Mehrzahl von Schallempfängern, vorgesehen sein.

Diese sieht vor, dass die zumindest eine Empfangseinrichtung, insbesondere die Mehrzahl von Schallempfängern derart angeordnet ist/sind, dass Schallwellen aus einem Boden empfangen werden, auf dem sich das militärische Fahrzeug befindet. Dadurch kann in besonders vorteilhafter Weise die höhere Dichte des Bodens und die daraus resultierenden verbesserten Eigenschaften bei der Leitung oder Übertragung von Schallwellen ausgenutzt werden. Dies kann bei der Klassifizierung und/oder Ortung von Objekten vorteilhaft sein, auch wenn diese Ausgestaltung besondere Anforderungen an die Empfangseinrichtung stellt, insbesondere für den Fall, dass diese auch bei einem sich bewegenden militärischen Fahrzeug zum Einsatz kommen soll. Denn dann kann ein Empfang aus dem Boden nur mittelbar erfolgen, während im Stand des Fahrzeugs vorgesehen sein kann, dass ein Schallempfänger der Empfangseinheit direkt im Boden selbst anbringbar ist.

Der Vollständigkeit halber sei hier noch erwähnt, dass die beiden vorangehend beschriebenen Ausgestaltungen der Empfangseinrichtung nicht nur alternativ, sondern auch miteinander kombiniert realisiert werden können. Dabei könnten die unterschiedlichen Ausbreitungseigenschaften der Schallwellen in der Atmosphäre und in dem Boden zusätzlich zur Klassifizierung und/oder Ortung von Objekten berücksichtigt werden. Beispielsweise könnte aufgrund der unterschiedlichen Ausbreitungsgeschwindigkeit der Schallwellen und einem dementsprechenden zeitlichen Versatz zwischen dem Empfang eines Signals aus der Atmosphäre und dem Empfang eines entsprechenden Signals aus dem Boden auf die Entfernung des Objektes zurückgeschlossen werden. Entsprechenden Überlegungen könnten gleichfalls auch zur verbesserten Klassifizierung der Objekte zum Einsatz kommen.

Eine ebenfalls besonders vorteilhafte Ausgestaltung des militärischen Fahrzeugs kann vorsehen, dass die zumindest eine Empfangseinrichtung, insbesondere die Mehrzahl von Schallempfängern, derart angeordnet ist/sind, dass gezielt Schallwellen empfangen werden, die vom Fahrzeug selbst erzeugt werden. Dadurch kann gewährleistet werden, dass die von dem militärischen Fahrzeug erzeugten Eigengeräusche erkannt und bei der Klassifizierung von Objekten und gegebenenfalls der Ortung von Objekten unberücksichtigt bleiben, indem die entsprechenden Anteile der mit der Empfangseinrichtung empfangenen akustischen Signale zur Klassifizierung gegebenenfalls Ortung von Objekten ausgefiltert oder zumindest abgedämpft werden. Dies kann insbesondere für schwere militärische Fahrzeuge von Nutzen sein, die selbst im Stand einen nicht unerheblichen Pegel an Eigengeräuschen erzeugen.

Zur Unterscheidung und entsprechenden Aufbereitung der empfangenen Schallwellen oder Signale kann gemäß einer weiteren, besonders bevorzugten Ausführungsform des militärischen Fahrzeugs vorgesehen sein, dass dieses eine Auswerteeinrichtung aufweist, die die mit der zumindest einen Empfangseinrichtung empfangenen Signale aufbereitet, insbesondere filtert. Dabei können sowohl die von den zu klassifizierenden und gegebenenfalls zu ortenden Objekten erzeugten akustischen Signale als auch von dem militärischen Fahrzeug selbst erzeugten akustischen Signale von der Auswerteeinheit aufbereitet werden. Die Aufbereitung, insbesondere die Filterung der entsprechenden Signale mit der Auswerteeinrichtung, kann dabei der Bearbeitung oder Verarbeitung der entsprechenden Signale durch die Klassifizierungseinrichtung und/oder das Ortungsmittel vorgeschaltet sein.

Eine weitere, besonders vorteilhafte Weiterbildung des militärischen Fahrzeugs sieht vor, dass die zumindest eine Empfangseinrichtung, insbesondere die Mehrzahl der Schallempfänger zum Empfang von niederfrequenten Schallwellen, insbesondere mit Frequenzen von weniger als 50 Hz, bevorzugt mit Frequenzen von weniger als 20 Hz, eingerichtet ist. Derartige niederfrequente Schallwellen eignen sich aufgrund verschiedener Eigenschaften, wie beispielsweise der geringen Dispersion, besonders gut zur Klassifikation und gegebenenfalls zur Ortung von Objekten.

Gemäß einer weiteren Ausführungsform des militärischen Fahrzeugs kann vorgesehen sein, dass die Klassifizierungseinrichtung eine akustische Signaturdatenbank umfasst, welche charakteristische akustische Signaturen von zu klassifizierenden Objekten umfasst. Dadurch wird einerseits die Klassifizierung von Objekten erleichtert und darüber hinaus eine sukzessive oder nachträgliche Erweiterung auf andere Objekte ermöglicht, die dadurch erfolgen kann, dass die Signaturdatenbank um entsprechende Signaturen erweitert wird. Außerdem hat eine derartige Signaturdatenbank den Vorteil, dass neben der Klassifizierung der Objekte auch eine Erkennungssicherheit oder ein Erkennungslevel erzeugt oder berechnet werden kann, mit dem die Zuverlässigkeit angegeben wird, mit der ein entsprechendes Objekt erkannt wurde, für das eine akustische Signatur in der Signaturdatenbank vorhanden ist. Eine derartige Erkennungssicherheit kann das Situationsbewusstsein für die Fahrzeuginsassen weiter erhöhen.

Gemäß einer weiteren, bevorzugten Ausführungsform des militärischen Fahrzeugs kann vorgesehen sein, dass das Fahrzeug eine grafische Anzeigeeinheit aufweist, die zur Ausgabe von mit der akustischen Klassifizierungseinrichtung klassifizierten Objekten, insbesondere an einen Fahrzeuginsassen, eingerichtet hat. Dadurch kann das Situationsbewusstsein des Fahrzeuginsassen weiter gesteigert werden, da das klassifizierte Objekt auf einer entsprechenden Anzeigeeinheit ausgegeben wird und dem Fahrzeuginsassen damit kenntlich gemacht werden kann. Die Art der grafischen Ausgabe kann dabei grundsätzlich unterschiedlich sein. Neben einer textbasierten grafischen Ausgabe kann auch eine bildliche grafische Ausgabe in Form einer Abbildung eines klassifizierten Objekts erfolgen. Auch Mischformen der vorangehend beschriebenen grafischen Ausgaben sind dabei denkbar.

Gemäß einer besonders vorteilhaften Ausgestaltung kann dabei vorgesehen sein, dass die grafische Anzeigeeinheit für eine überlagerte Ausgabe, zusammen mit der Ausgabe von zumindest einer weiteren Sichteinrichtung des Fahrzeugs eingerichtet ist. Eine derart überlagerte grafische Ausgabe, die sowohl eine grafische Ausgabe zu zumindest einem klassifizierten Objekt und darüber hinaus die Ausgabe von zumindest einer weiteren Sichteinrichtung des Fahrzeugs umfasst, kann das Situationsbewusstsein für Fahrzeuginsassen weiter steigern. Dies ist insbesondere, keinesfalls jedoch ausschließlich dann der Fall, wenn neben der Klassifizierung der Objekte mittels der Klassifizierungseinrichtung auch eine akustische Ortung der Objekte mit dem Objektortungsmittel stattfindet und die Anzeigeeinheit dazu eingerichtet ist, die überlagerte Ausgabe derart zu erzeugen, dass eine lagerichtige Einblendung oder Darstellung des klassifizierten Objekts zusammen mit der Ausgabe einer Sichteinrichtung ermöglicht wird. Dies bedeutet, dass die Anzeigeeinheit in Abhängigkeit des Sichtfelds der zumindest einen weiteren Sichteinrichtung die Darstellung und die Darstellungsposition der grafischen Ausgabe zu dem klassifizierten Objekt steuert, um die grafische Ausgabe zu dem klassifizierten Objekt an einem Platz in der überlagerten Ausgabe darzustellen, die der Richtung oder der Position des Objekts in der Umgebung des militärischen Fahrzeugs entspricht.

Erfindungsgemäß weist das Fahrzeug eine Wanne und einen gegenüber der Wanne drehbar gelagerten Turm auf. Weiterhin sind der Lautsprecher am Turm und die Mikrofone an der Wanne des Fahrzeugs angeordnet. Die Mikrofone und der Lautsprecher sind derart eingerichtet, dass bei der lagerichtigen Übertragung die Stellung des Turms gegenüber der Wanne berücksichtigt wird.

Die Stellung des Turmes kann derart berücksichtigt werden, dass es für Personen im Turm so wirkt, als würden diese die Umweltgeräusche direkt und nicht über eine Mikrofon-Lautsprecher-Übertragung wahrnehmen. Bei einer Drehbewegung des Turms gegenüber der Wanne kommt es auch zu einer Drehbewegung der am bzw. im Turm angeordneten Lautsprecher gegenüber den wannenseitig angeordneten Mikrofonen. Um trotz einer solchen Relativbewegung das Situationsbewusstsein einer im Turm sitzenden Person zu verbessern kann die Stellung des Turmes gegenüber der Wanne bei der lagerichtigen Übertragung berücksichtigt werden. Wenn sich das Fahrzeug beispielsweise seitlich einer Geräuschquelle befindet, der Turm jedoch derart gedreht ist, dass eine sich im Turm befindliche Person in Richtung der Geräuschquelle blickt, werden dieser Person die Geräusche so wiedergegeben, als wenn auch das Fahrzeug und die Mikrofone entsprechend auf die Geräuschquelle ausgerichtet wären. Es ist möglich, dass verschiedenen Personen im Fahrzeug, je nachdem wie diese Personen zu den Geräuschquellen ausgerichtet sind, verschiedene akustische Signale wiedergegeben werden.

Die oben genannte Aufgabe wird bei einem Verfahren zur Geräuschübertragung in einen Fahrzeugraum eines Fahrzeugs, insbesondere eines gepanzerten Fahrzeugs, mit den Merkmalen das Anspruchs 13 gelöst. Insgesamt ergeben sich bei dem erfindungsgemäßen Verfahren und dessen nachfolgend beschriebenen Einzelheiten und Ausgestaltungen die gleichen Vorteile und Vorzüge, wie sie im Zusammenhang mit den vorangehend beschriebenen entsprechenden Merkmalen des Fahrzeugs bereits offenbart wurden. Dementsprechend wird nachfolgend nur entsprechend nur kurz auf die vorteilhaften Wirkungen des Verfahrens und dessen Ausgestaltung eingegangen und auf die vorangehende Beschreibung des Fahrzeugs verwiesen.

Gemäß einer ersten vorteilhaften Ausgestaltung kann vorgesehen sein, dass bei dem Verfahren über die mindestens zwei Mikrofone und den zumindest einen Lautsprecher Umweltgeräusche lagerichtig aus der Umgebung des Fahrzeugs in den Fahrzeuginnenraum übertragen werden.

Auch kann in einer besonders bevorzugten Ausgestaltung des Verfahrens vorgesehen sein, dass Umweltgeräusche aus unterschiedlichen Richtungen von unterschiedlichen Mikrofonen unterschiedlich empfangen werden. Dazu kann eine entsprechende Anordnung und Ausrichtung der Mikrofone verwendet werden.

Ein weiteres Ausführungsbeispiel des erfindungsgemäßen Verfahrens sieht vor, dass mit einem Störgeräusch-Mikrofon Fahrzeuggeräusche des Fahrzeugs und/oder andere Störgeräusche empfangen werden.

Gemäß einer weiteren vorteilhaften Ausführungsform des Verfahrens kann vorgesehen sein, dass mit zumindest einem im Innenraum des Fahrzeugs angeordneten Lautsprecher Umweltgeräusche aus der Umgebung des Fahrzeugs ausgegeben werden.

Besonders vorteilhaft kann zudem vorgesehen sein, dass der zumindest eine Lautsprecher gegenüber zumindest einem Teil des Fahrzeugs oder des Fahrzeuginnenraums bewegt wird.

Besonders vorteilhaft kann dabei vorgesehen sein, dass der zumindest eine Lautsprecher, zusammen mit einem Kopf eines Fahrzeuginsassen, bewegt wird.

In einer besonders vorteilhaften Weiterbildung des Verfahrens kann zudem vorgesehen sein, dass die Bewegung eines Fahrzeuginsassen, insbesondere die Kopfbewegung eines Fahrzeuginsassen mit einem Bewegungssensor ermittelt wird.

Außerdem kann eine vorteilhafte Ausführungsform des Verfahrens vorgesehen werden, gemäß derer der zumindest eine Lautsprecher, zusammen mit einer Sichteinrichtung zur optischen Wahrnehmung, von zumindest einem Teil der Umgebung des Fahrzeugs bewegt wird.

Weiter kann besonders vorteilhaft vorgesehen sein, dass die Geräuschübertragung in den Innenraum des Fahrzeugs über zumindest zwei Ausgabeeinheiten des Lautsprechers erfolgt.

Außerdem sieht eine bevorzugte Ausführungsform des Verfahrens vor, dass die Geräuschübertragung von Umweltgeräuschen in den Innenraum des Fahrzeugs über mehrere Lautsprecher erfolgt, wobei jeder Lautsprecher eine lagerichtige Übertragung des Umweltgeräusche bewirkt oder jeder Lautsprecher zu einer lagerichtigen Übertragung der Umweltgeräusche beiträgt.

Außerdem kann vorteilhaft vorgesehen sein, dass die Signale der mindestens zwei Mikrofone in Abhängigkeit der Anordnung und Ausrichtung der Mikrofone von einer Signalverarbeitungseinheit verarbeitet werden.

Auch kann vorteilhaft vorgesehen sein, dass die Signale der mindestens zwei Mikrofone in Abhängigkeit der Ausrichtung von einer Sichteinrichtung von einer Signalverarbeitungseinheit verarbeitet werden.

Weiter kann vorteilhaft vorgesehen sein, dass die Signale der mindestens zwei Mikrofone in Abhängigkeit der Anordnung und/oder Ausrichtung des zumindest einen Lautsprechers von einer Signalverarbeitungseinheit verarbeitet werden.

Gemäß einer weiteren, besonders vorteilhaften Ausführungsform des Verfahrens ist vorgesehen, dass die Signale des der mindestens zwei Mikrofone in Anhängigkeit der Bewegung des zumindest einen Lautsprechers von einer Signalverarbeitungseinheit verarbeitet werden.

Auch kann gemäß des erfindungsgemäßen Verfahrens vorgesehen sein, dass die Signale von zumindest einem Störgeräusch-Mikrofon von einer Signalverarbeitungseinheit verarbeitet werden, insbesondere von den Schallsignalen der mindestens zwei Mikrofone subtrahiert werden.

Schließlich sieht eine weitere, vorteilhafte Ausgestaltung des Verfahrens vor, dass die Übertragung von Umweltgeräuschen aus der Umgebung des Fahrzeugs in den Fahrzeuginnenraum über eine Fahrzeugverständigungsanlage erfolgt, die insbesondere den zumindest einen Lautsprecher umfasst.

Eine weitere Ausgestaltung des Verfahrens soll vorsehen, dass zur akustischen Aufklärung mit einer akustischen Aufklärungseinrichtung eines Fahrzeugs, welches den Empfang von akustischen Signalen mit zumindest einer akustischen Empfangseinrichtungen erfolgt, wobei eine Klassifizierung von Objekten durch eine Analyse der mit der zumindest einen Empfangseinrichtung empfangenen akustischen Signalen durchgeführt wird. Dabei können die Mikrofone einen Teil der Empfangseinrichtung bilden. Das Verfahren ermöglicht ein zusätzlich gesteigertes Situationsbewusstsein für die Fahrzeuginsassen, wie mit Bezug auf das entsprechende Fahrzeug bereits beschrieben wurde.

Hinsichtlich weiterer Einzelheiten des Verfahrens zur Übertragung von Umweltgeräuschen in den Fahrzeuginnenraum und zur akustischen Aufklärung wird auf die oben beschriebenen Details des entsprechenden Fahrzeugs verwiesen.

Weitere Vorteile und Einzelheiten der erfindungsgemäßen Fahrzeuge sowie des erfindungsgemäßen Verfahrens werden nachfolgend unter Zuhilfenahme der beigefügten schematisierten Zeichnungen erläutert werden, welche Ausführungsbeispiele des Verfahrens sowie des Fahrzeugs umfassen. Darin zeigen:
- Fig. 1: eine schematische Darstellung eines erfindungsgemäßen Fahrzeugs gemäß einer ersten Ausführungsform;
- Fig. 2: eine schematische Darstellung eines erfindungsgemäßen Fahrzeugs gemäß einer zweiten Ausführungsform;
- Fig. 3: eine schematische Darstellung einzelner Komponenten eines erfindungsgemäßen Fahrzeugs;
- Fig. 4: eine schematische Darstellung eines erfindungsgemäßen Fahrzeugs gemäß einer dritten Ausführungsform;
- Fig. 5: ein schematisches Ablaufdiagramm eines erfindungsgemäßen Verfahrens gemäß einer ersten Ausführungsform;
- Fig. 6: eine schematische Darstellung eines erfindungsgemäßen Fahrzeugs gemäß einer vierten Ausführungsform.

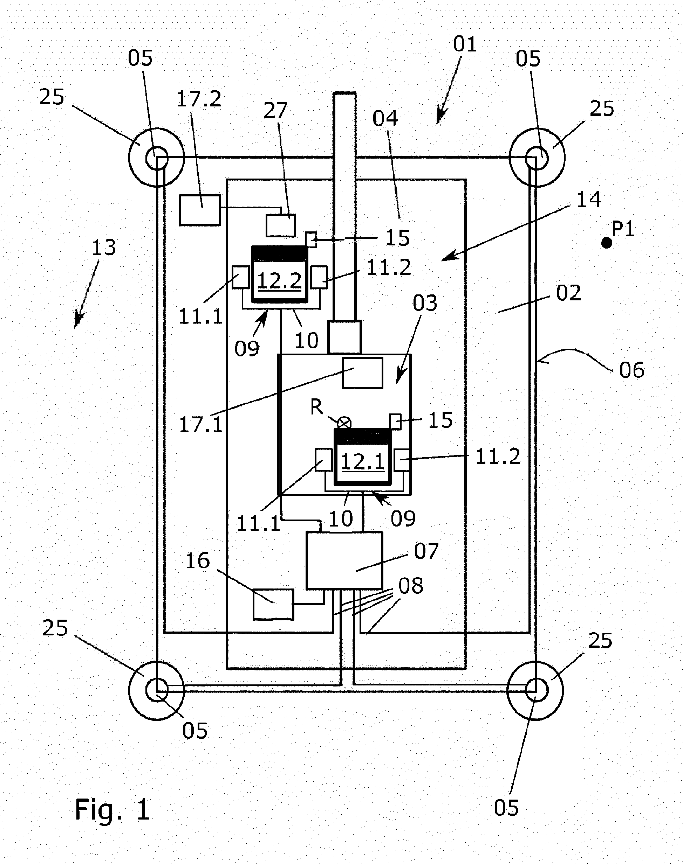

Die Fig. 1 zeigt ein Fahrzeug 01, welches als gepanzertes Fahrzeug in Form eines Kampfpanzers ausgebildet ist. Das Fahrzeug 01 umfasst dabei ein Fahrgestell 02, einen Turm 03 sowie einen den Turm 03 mit dem Fahrgestell 02 verbindende Wanne 04. Auf der Außenkontur 06 des Fahrzeugs 01 sind dabei vier Mikrofone 05 angeordnet, die an den äußeren Ecken des Fahrgestells 02 angebracht sind. Damit sind die Mikrofone 05, soweit dies auf der Außenkontur 06 des Fahrzeugs 01 möglich ist, maximal voneinander beabstandet. Das Fahrzeug 01 umfasst darüber hinaus auch eine Signalverarbeitungseinheit 07, welche im Beispiel der Fig. 1 im hinteren Teil der Wanne 04 des Fahrzeugs 01 angeordnet ist. Die Anordnung der Signalverarbeitungseinheit 07 im Bereich der Wanne 04 ist dabei jedoch rein beispielhaft. Die Mikrofone 05 sind jeweils mit der Signalverarbeitungseinheit 07 über die Empfangsleitungen 08 verbunden.

Die Mikrofone 05 empfangen Umweltgeräusche aus einem Empfangsbereich 25. Im Beispiel der Fig. 1 sind die Mikrofone 05 als Rundum-Mikrofone ausgestaltet, die abgesehen von etwaigen Abschattungen durch die Fahrzeugkontur einen kreis- oder kugelförmigen Empfangsbereich 25 aufweisen.

Außerdem umfasst das Fahrzeug 01 gemäß dem Beispiel der Fig. 1 zwei Lautsprecher 09, die jeweils als Kopfhörer 10 ausgebildet sind und zwei getrennt voneinander angeordnete und individuell ansteuerbare Ausgabeeinheiten 11 aufweisen. Die Lautsprecher 09 sind dabei je einem Fahrzeuginsassen 12 zugeordnet. Die Darstellung der Fahrzeuginsassen 12 umfasst einen schwarzen Balken. Dieser soll die jeweilige Blickrichtung des Fahrzeuginsassen 12 darstellen, wobei die Blickrichtung senkrecht zur Längsrichtung des schwarzen Balkens verläuft. Der schwarze Balken symbolisiert somit in etwa das Gesicht des Fahrzeuginsassen 12. Mittels der Signalverarbeitungseinheit 07 können die aus der Umgebung 13 des Fahrzeugs 01 empfangenen Umweltgeräusche zu einem akustischen Signal aufgearbeitet werden, welches neben den reinen akustischen Informationen auch richtungs- oder raumwinkelbezogene Informationen bezüglich der Geräuschquellen umfasst. Dies kann beispielsweise durch die Analyse der unterschiedlichen Signale der Mikrofone 05, insbesondere der Analyse von Laufzeitunterschieden oder Phasenunterschieden zwischen den Signalen der Mikrofone 05 des Fahrzeuges 01 ermöglicht werden.

Das von der Signalverarbeitungseinheit 07 derart aufbereitete Signal wird anschließend über die zwei Lautsprecher 09 in den Fahrzeuginnenraum 14 des Fahrzeugs 01 weitergeleitet und über diese ausgegeben. Damit werden die Umweltgeräusche aus der Umgebung 13 des Fahrzeugs 01 in den Fahrzeuginnenraum 14 übertragen. Zudem kann vorgesehen sein, dass die Übertragung lagerichtig erfolgt. Dazu kann beispielsweise die Signalverarbeitungseinheit so ausgestaltet sein, dass ein Umweltgeräusch, welches aus dem Bereich oder der Richtung P1 stammt, über die Lautsprecher 09 so an die Fahrzeuginsassen 12 ausgegeben oder übertragen wird, dass die Übertragung ausschließlich über die jeweils rechte Ausgabeeinheit 11.2 der zwei Ausgabeeinheiten 11.1 und 11.2 des Lautsprechers 09 erfolgt. Dadurch kann erreicht werden, dass das Situationsbewusstsein der Fahrzeuginsassen 12 im Fahrzeuginnenraum 14 des Fahrzeugs 01 deutlich gesteigert wird.

Im Beispiel der Fig. 1 kann vorgesehen sein, dass die Mikrofone 05 gleichermaßen sowohl zum Empfang von Umweltgeräuschen als auch zum Empfang von Fahrzeuggeräuschen des Fahrzeugs 01 und/oder anderen Störgeräuschen eingerichtet sind. Alternativ dazu kann jedoch auch vorgesehen sein, dass separate Störgeräusch-Mikrofone vorgesehen sind, die zum Empfang von charakteristischen Störgeräuschen und/oder Fahrzeuggeräuschen an entsprechend bevorzugten Positionen am oder im Fahrzeug 01 angeordnet sind.

Da die Lautsprecher 09 über die Signalverarbeitungseinheit 07 ohnehin miteinander zumindest mittelbar verknüpft sind, kann weiter vorgesehen werden, dass die Lautsprecher 09 als Teil einer Fahrzeugverständigungsanlage ausgebildet sind, die neben den Fahrzeuginsassen 12 zugeordneten Sprachmikrofonen 15 auch eine Fernmelde- und/oder Kommunikationsschnittstelle 16 des Fahrzeugs 01 umfassen kann. Der Turm 03 als Teil des Fahrzeuginneren 14 ist bei der Ausgestaltung des Fahrzeugs 01 als Kampfpanzer gegenüber anderen Teilen des Fahrzeugs 01 bewegbar. Der Turm 03 des Fahrzeugs 01 verfügt darüber hinaus über eine erste Sichteinrichtung 17.1. Die Sichteinrichtung 17. 1 kann als Sichtluke oder Sichtschlitz ausgebildet sein. Die Sichteinrichtung 17.1 kann aber auch als Winkelsichteinrichtung oder als digitale Sichteinrichtung ausgebildet sein, wobei die Sichteinrichtung zum Empfang von elektromagnetischen Wellen in und außerhalb des sichtbaren Spektralbereichs eingerichtet sein kann.

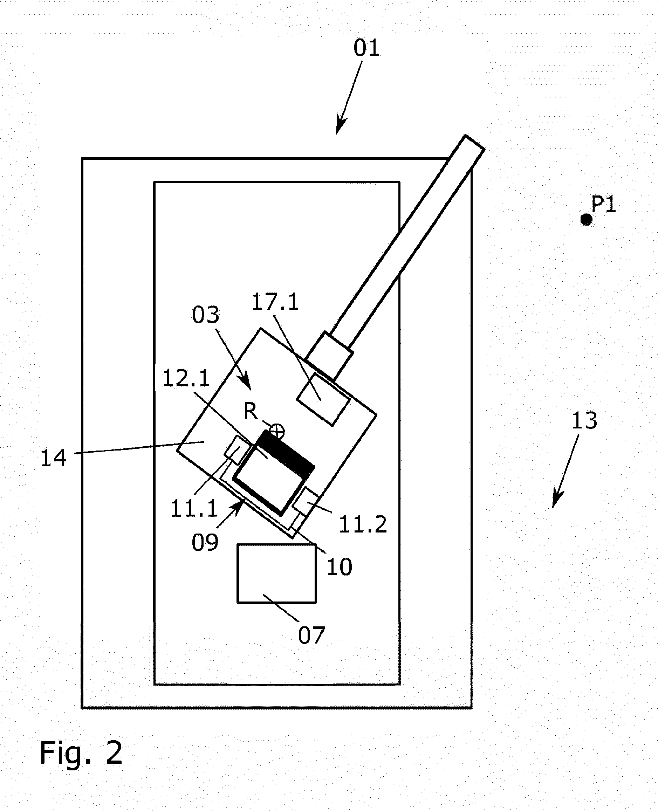

Dementsprechend kann beispielsweise der Fahrzeuginsasse 12.1 bei einem anhaltenden gegebenenfalls für das Situationsbewusstsein interessanten Geräusch aus der Richtung P1 über eine Steuerung veranlassen, dass der Turm 03 um eine Rotationsachse R in Richtung P1 gedreht wird. Eine daraus resultierende Position und Ausrichtung des Fahrzeugs 01 und die entsprechenden Veränderungen hinsichtlich der Übertragung der Umweltgeräusche aus der Umgebung 13 des Fahrzeugs 01 in den Fahrzeuginnenraum werden anhand der Fig. 2 verdeutlicht.

Die Fig. 2 zeigt ein Fahrzeug 01, bei dem der Turm 03 entsprechend in Richtung P1 um die Rotationsachse R des Turms 03 rotiert wurde. Wie aus der Darstellung der Fig. 2 erkenntlich ist, wurde im Rahmen der Rotation des Turms 03 auch der Lautsprecher 09 des Fahrzeuginsassen 12.1 zusammen mit dem Turm 03 als Teil des Fahrzeuginnenraums 14 und zusammen mit der am Turm 03 angeordneten Sichteinrichtung 17.1 zur optischen Wahrnehmung von zumindest einem Teil der Umgebung des Fahrzeugs 01 bewegt.

Soweit das vom Punkt P1 oder aus Richtung des Punkts P1 ausgehende Umweltgeräusch über die Zeit der Rotation des Turms 03 und gegebenenfalls darüber hinaus anhält, kann vorgesehen sein, dass über eine entsprechende Sensorik, die beispielsweise die Position und/oder Bewegung des Turms 03 feststellt oder alternativ die Position und/oder Bewegung des Lautsprechers 09 des Fahrzeuginsassen 12.1 gegenüber den Mikrofonen 05 erfasst, die Übertragung des Umweltgeräusches an den Fahrzeuginsassen 12.1 über den Lautsprecher 09 mit der Signalverarbeitungseinheit 07 derart angepasst worden sein, dass bereits während der Rotation des Turms 03 das vom Punkt oder aus der Richtung P1 stammende Geräusch, zunehmend auch über die linke Ausgabeeinheit 11.1 des Kopfhörers 10 an den Fahrzeuginsassen 12.1 ausgegeben oder übertragen wurde. Dementsprechend erhält der Fahrzeuginsasse 12.1 die intuitive akustische Rückmeldung, dass die eingeleitete Rotation des Turms 03 dazu führt, dass sich der Turm 03 und damit die Sichteinrichtung 17.1 und damit auch der Fahrzeuginsasse 12.1 in die Richtung bewegt, aus der das Umweltgeräusch stammt, nämlich vom Punkt oder aus der Richtung P1. Dementsprechend wird das Situationsbewusstsein des Fahrzeuginsassen 12.1 nicht nur dadurch erhöht, dass er im Fahrzeuginnenraum 14 überhaupt Umweltgeräusche wahrnehmen kann, sondern auch dadurch deutlich verbessert, dass die Übertragung der Umweltgeräusche lagerichtig und insbesondere unabhängig von der eigenen Ausrichtung oder der Ausrichtung des ihm zugeordneten Lautsprechers 09 lagerichtig erfolgt.

Außerdem verfügt das Fahrzeug 01 der Fig. 1 über eine zweite Sichteinrichtung 17.2, welche unabhängig von den restlichen Bestandteilen des Fahrzeugs 01 bewegt werden kann, um das mit der zweiten Sichteinrichtung 17.2 erfasste Sichtfeld zu ändern. Die zweite Sichteinrichtung 17.2 kann beispielsweise als Multifunktionssichteinrichtung ausgebildet und auf einer drehbaren Plattform gelagert sein. Das erfasste Sichtfeld wird dem Fahrzeuginsassen 12 zumindest auch über eine Anzeigeeinheit 27 zur Anzeige gebracht, wobei die Anzeigeeinheit 27 unbeweglich gegenüber zumindest eines Teils des Fahrzeugs 01 ausgestaltet ist. Damit stimmen die Richtung des Sichtfelds der zweiten Sichteinrichtung 17.2 und die Richtung der Anzeige des Sichtfelds auf der Anzeigeeinheit 27 nur für in einem einzigen Fall übereinstimmender Ausrichtung miteinander überein. Um jedoch auch für den Fahrzeuginsassen 12.2, welcher die zweite Sichteinrichtung 17.2 bedient, eine zumindest virtuell lagerichtige Übertragung von Umweltgeräuschen in das Fahrzeuginnere 14 zu ermöglichen, wird die Ausrichtung der zweiten Sichteinrichtung 17.2 mit einer entsprechenden Sensorik überwacht und die Ausgabe der übertragenen Umweltgeräusche mittels des Kopfhörers 10 des Fahrzeuginsassen 12.2 in Abhängigkeit der Ausrichtung der zweiten Sichteinrichtung 17.2 von der Signalverarbeitungseinheit 07 verarbeitet und ausgegeben.

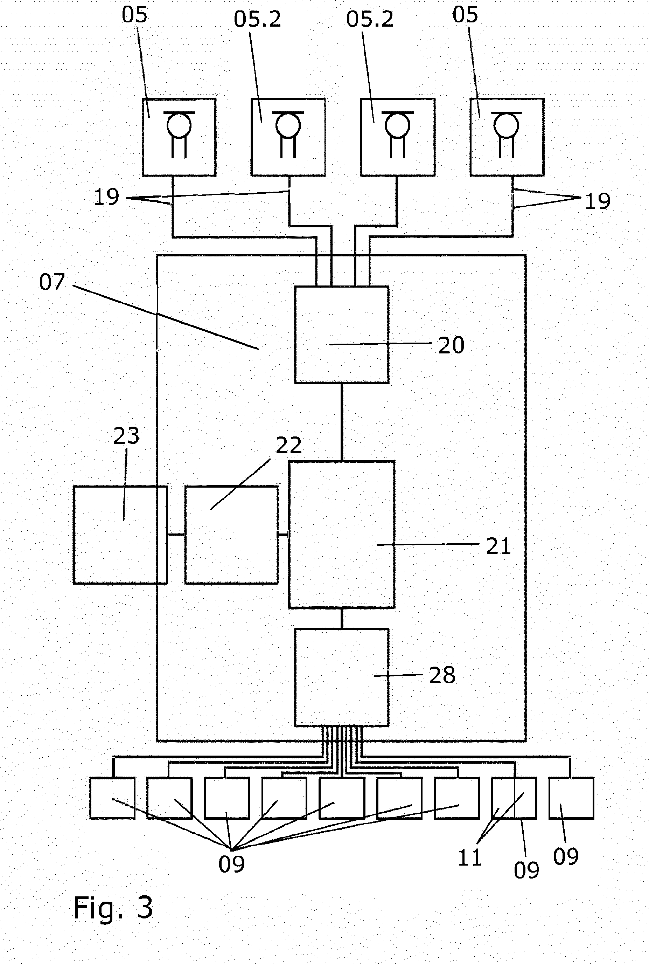

Die Fig. 3 zeigt weitere Einzelheiten des Fahrzeugs 01. Die Anordnung der Komponenten der schematischen Darstellung der Fig. 3 ist dabei eher aus darstellungstechnischen Gründen gewählt und weist mit der tatsächlichen Anordnung der Gegenstände in einem erfindungsgemäßen Fahrzeug nur eine sehr bedingte Übereinstimmung auf.

Dargestellt sind vier Mikrofone 05, von denen zwei Mikrofone 05 zum Empfang von Umweltgeräuschen aus der Umgebung des Fahrzeugs 01 eingerichtet sind und zwei weitere Mikrofone 05 als Störgeräusch-Mikrofone 05.2 ausgebildet sind, die dazu eingerichtet sind, Fahrzeugeigengeräusche und andere Störgeräusche zu empfangen. Die Mikrofone 05 und 18 sind über entsprechende Empfangsleitungen 19 mit der Signalverarbeitungseinheit 07 verbunden. Dabei werden die von den Mikrofonen 05 und 18 empfangenen Signale zunächst einem Verstärker 20 der Signalaufbereitungseinheit 07 zugeführt.

Im Anschluss an eine Verstärkung der empfangenen Signale mit dem Verstärker 20 werden die verstärkten Signale einer Analyseeinheit 21 zugeführt. Die Analyseeinheit 21 nimmt eine Analyse der verstärkten Signale vor, wodurch einerseits Fahrzeuggeräusche und/oder andere Störgeräusche aus den von dem Mikrofon 05 empfangenen Signalen ausgefiltert oder durch eine entsprechende amplitudeninvertierte Interferenz mit den Signalen der Störgeräusch-Mikrofone 05.2 entfernt werden. Darüber hinaus kann bei einer Verarbeitung der empfangenen Signale durch die Analyseeinheit 21 der Signalaufbereitungseinheit 07 aufgrund von Unterschieden der Signale und unter Berücksichtigung der unterschiedlichen Anordnungspunkte und Ausrichtungen der Mikrofone 05 aus den aufbereiteten Signalen ein Raumklangsignal gewonnen werden, welches neben den akustischen Informationen auch räumliche Informationen über den Ursprung oder die Empfangsrichtung der von den Mikrofonen 05 empfangenen Umweltgeräuschen umfasst. Die Analyse der Analyseeinheit 21 kann beispielsweise Fourier-Transformationen sowie Filter und andere Transformationen der Signale umfassen. Die Signalverarbeitungseinheit 07 kann darüber hinaus eine Steuereinheit 22 aufweisen, welche wiederum mit einer Sensorik 23 gekoppelt sein kann.

Die Sensorik 23 kann dabei derart ausgestaltet sein, dass sie mitunter die Position und/oder Ausrichtung von Teilen des Fahrzeugs 01, die Position und/oder Ausrichtung von Sichteinrichtungen 17, die Position und/oder Ausrichtung von einzelnen Lautsprechern 09, die Position und/oder Ausrichtung von Fahrzeuginsassen 12, insbesondere die Position und/oder Ausrichtung von Köpfen von Fahrzeuginsassen 12 erfassen und entsprechend an die Steuereinheit 22 übermitteln kann. Aus den durch die Sensorik 23 erfassten Informationen wird seitens der Steuereinheit 22 entsprechend die Analyseeinheit 21 gesteuert, um möglichst für jeden der ausgangsseitig mit der Signalverarbeitungseinheit 07 verbundenen Lautsprecher 09 sowie deren Ausgabeeinheiten 11 eine Übertragung der von den Mikrofonen 05 empfangenen Umweltgeräuschen aus der Umgebung des Fahrzeugs 01 zu ermöglichen, die im besten Fall nicht nur die bloße Übertragung der Umweltgeräusche, sondern auch einen für jeden Fahrzeuginsassen 12 eine lagerichtige und damit das Situationsbewusstsein steigernde Übertragung der Umweltgeräusche erlaubt. Nachdem die Signale die Analyseeinheit verlassen, können sie vor ihrer Ausgabe über die Lautsprecher 09 noch die Endstufe 28 durchlaufen.

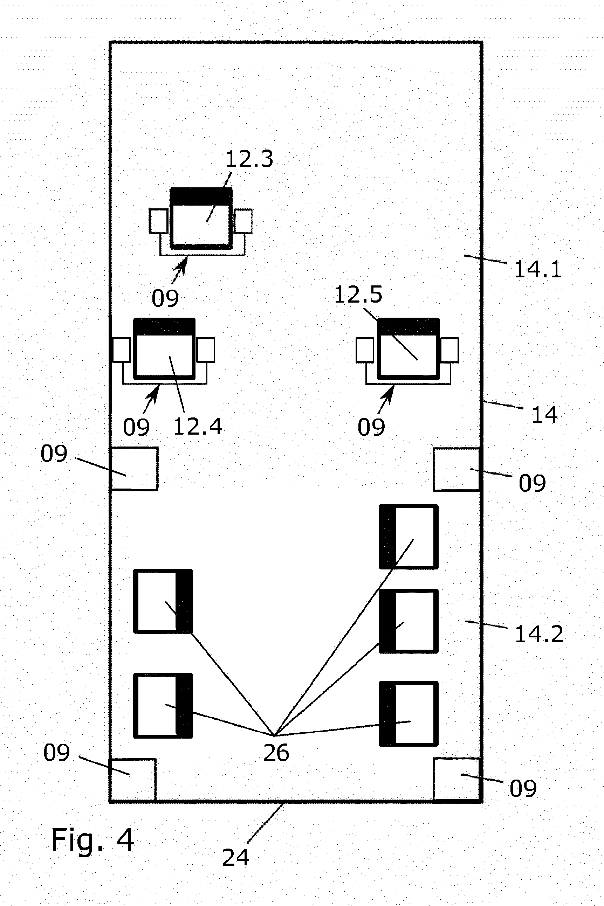

Fig. 4 zeigt beispielhaft einen Fahrzeuginnenraum 14 eines Fahrzeugs 01, welches beispielsweise als gepanzertes Truppentransportfahrzeug ausgebildet ist. Der Fahrzeuginnenraum 14 kann dementsprechend als Fahrzeuginnenraum 14 eines gepanzerten Truppentransportfahrzeugs ausgebildet sein. Wie aus der Fig. 4 hervorgeht, sind in dem Fahrzeuginnenraum 14 eine Mehrzahl von Fahrzeuginsassen 12 befindlich. Im vorderen oder oberen Bereich 14.1 des Fahrzeuginnenraums 14 sind dabei beispielsweise Fahrzeuginsassen 12 angeordnet, die als Militärkraftfahrer 12.3, als Richtschütze 12.4 und/oder als Kommandant 12.5 fungieren. Im hinteren oder unteren Bereich 14.2 des Fahrzeuginnenraums 14 können sich beispielsweise Fahrzeuginsassen 12 aufhalten, die einen Infanterietrupp 26 bilden und die gegebenenfalls durch eine Luke 24 des Fahrzeuginnenraums 14 vom Fahrzeug 01 absitzen können.

Dabei kann es für alle Fahrzeuginsassen 12 im Fahrzeuginnenraum 14 von besonderem Vorteil sein, wenn Umweltgeräusche aus der Umgebung des Fahrzeugs 01 in den Fahrzeuginnenraum 14 übertragen werden. Für die Fahrzeuginsassen 12 in Form des Infanterietrupps 26 im hinteren oder unteren Bereich 14.2 des Fahrzeuginnenraums 14 kann beispielsweise vorgesehen sein, dass vier Lautsprecher 09 in dem entsprechenden Bereich des Fahrzeuginnenraums 14 unbeweglich angeordnet sind. Über die räumliche Distanz der Lautsprecher 09 zueinander kann dabei trotz deren räumlicher Unbeweglichkeit eine lagerichtige Übertragung von Umweltgeräuschen aus der Umgebung des Fahrzeugs 01 in den entsprechenden hinteren Bereich 14.2 des Fahrzeuginnenraums 14 erfolgen. Dabei erfolgt die lagerichtige Übertragung über die Lautsprecher 09 für alle Fahrzeuginsassen 12 des Infanterietrupps 26.

Außerdem kann vorgesehen sein, dass für die Fahrzeuginsassen 12 im vorderen oder oberen Bereich 14.1 des Fahrzeuginnenraums 14, in dem beispielsweise die Fahrzeugeigengeräusche stärker wahrnehmbar sind, die Fahrzeuginsassen 12 mit individuellen Lautsprechern 09 in Form von Kopfhörern 10 ausgestattet werden. Dadurch kann auch den Fahrzeuginsassen 12 im oberen oder vorderen Bereich 14.1 des Fahrzeuginnenraums 14 ermöglicht werden, ihr jeweiliges Situationsbewusstsein auf Grundlage von aus der Umgebung des Fahrzeugs 01 in den Fahrzeuginnenraum 14 übertragenen Umweltgeräuschen, insbesondere lagerichtig übertragenen Umweltgeräuschen, zu erhöhen und zu verbessern.

Folglich wird für alle Fahrzeuginsassen 12 die Durchführung ihres Auftrages erleichtert, da sie, soweit sie im Fahrzeuginnenraum 14 befindlich sind, entsprechende Informationen über die Umgebung des Fahrzeugs 01 erhalten, indem Umweltgeräusche in den Fahrzeuginnenraum 14 übertragen werden. So können beispielsweise die Mitglieder des Infanterietrupps 26 im hinteren Bereich 14.2 des Fahrzeuginnenraums 14 bereits vor dem Absitzen vom Fahrzeug 01 einen gewissen akustischen Eindruck über die Umgebung bzw. eine Orientierung um das Fahrzeug 01 erhalten. Auch die verbleibenden Fahrzeuginsassen 12 können während des Führens und des Bedienens des Fahrzeugs 01 ihr Situationsbewusstsein durch die in den Fahrzeuginnenraum 14 übertragenen Umweltgeräusche erhöhen und verbessern.

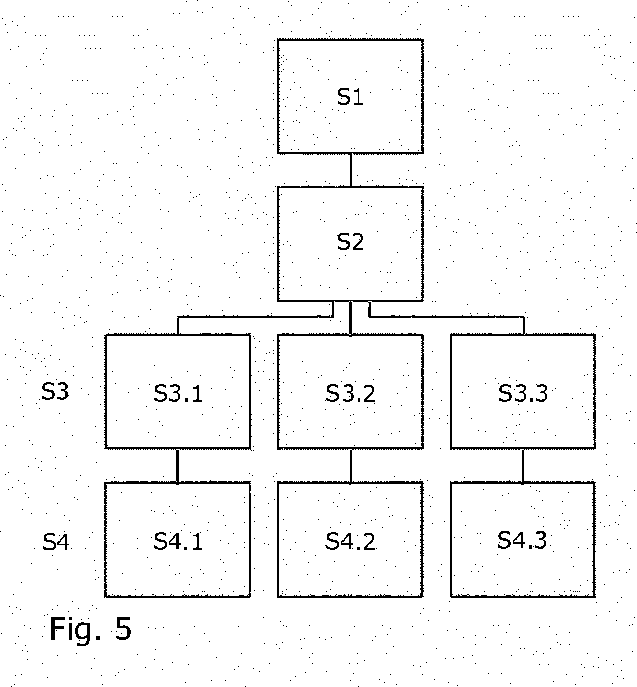

Fig. 5 zeigt einen schematischen Verfahrensablauf einer Ausführungsform des erfindungsgemäßen Verfahrens. Das Verfahren zur Geräuschübertragung in einen Fahrzeuginnenraum umfasst dabei die Verfahrensschritte S1 bis S4. In einem ersten Verfahrensschritt S1 werden von zumindest einem Mikrofon Umweltgeräusche aus der Umgebung des Fahrzeugs 01 empfangen. Der Verfahrensschritt S1 kann auch das Empfangen von Störgeräuschen oder Fahrzeuggeräuschen mit entsprechenden Störgeräusch-Mikrofonen 05.2 umfassen.

Im Verfahrensschritt S2 kann eine Analyse der empfangenen Signale der Mikrofone erfolgen. Die Analyse im Rahmen des Verfahrensschritts S2 ist dabei noch unabhängig von der jeweiligen Ausgestaltung des oder der Lautsprecher, die zur Übertragung der Umweltgeräusche in den Fahrzeuginnenraum 14 zum Einsatz kommen. Im Verfahrensschritt S2 kann also eine allgemeine Analyse oder eine Voranalyse durchgeführt werden. Beispielsweise kann ein Ausfiltern von Fahrzeug- oder Störgeräuschen erfolgen. Außerdem kann, soweit eine lagerichtige Übertragung der Umweltgeräusche für zumindest einen Teil der Lautsprecher 09 oder Fahrzeuginsassen 12 vorgesehen ist, die Analyse im Verfahrensschritt S2 auch die Aufbereitung des empfangenen Signale der Mikrofone 05 oder des Mikrofons 05 zu einem Raumklang umfassen, der die akustischen Informationen mit entsprechenden Richtungs- oder Rauminformationen verknüpft.

Der anschließende Verfahrensschritt S3 ist unterteilt in parallel durchgeführte Verfahrensschritte S3.1 bis S3.3. Diese Verfahrensschritte werden insbesondere dann ausgeführt, wenn eine individuelle lagerichtige Übertragung der empfangenen Umweltgeräusche für eine Mehrzahl von Lautsprechern 09 oder Lautsprechergruppen erreicht werden soll. Im Beispiel der Fig. 5 soll vorgesehen sein, dass drei Lautsprecher 09 in Form von Kopfhörern 10 mit je zwei Ausgabeeinheiten 11 für eine jeweils individuelle lagerichtige Übertragung von Umweltgeräuschen zum Einsatz kommen. Dementsprechend finden drei parallele Analyse- und Verarbeitungsschritte im Rahmen der Schritte S3.1 bis S3.3 statt, die eine individuelle Anpassung des bereits analysierten und vorverarbeiteten Raumklang-Signals an den jeweiligen Lautsprecher 09 darstellen. Dazu kann über eine in der Fig. 5 nicht dargestellte Sensorik erzeugtes Steuersignal zum Einsatz kommen, welches die Grundlage der individuellen Anpassung oder Analyse bildet. Die Sensorik kann die Ausrichtung eines beweglichen Lautsprechers, die Ausrichtung einer Sichteinrichtung oder dergleichen feststellen.

In einem abschließenden Verfahrensschritt S4 erfolgt jeweils parallel eine Ausgabe der übertragenen Umweltgeräusche über die in der Fig. 5 nicht dargestellten Lautsprecher 09. An jedem Lautsprecher 09 kann somit in den entsprechenden Verfahrensschritten S4.1 bis S4.3 ein individuelles Signal ausgegeben werden, welches für den jeweiligen Benutzer oder Fahrzeuginsassen 12 zu einer lagerichtigen Übertragung von Umweltgeräuschen in den Fahrzeuginnenraum 14 führt.

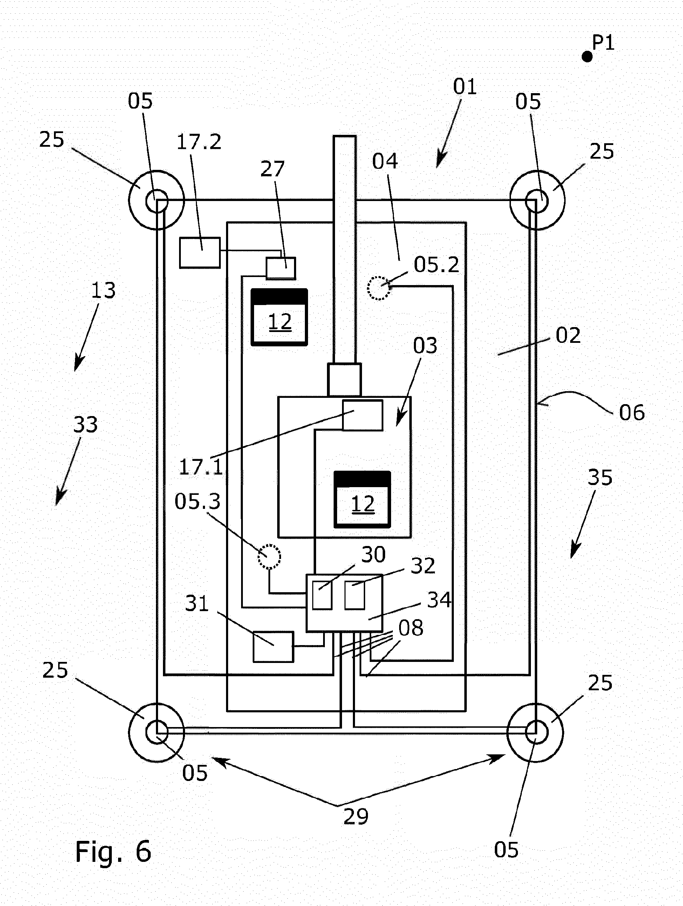

Die Fig. 6 zeigt ein militärisches Fahrzeug 01, welches in Anlehnung an die Darstellung der Fig. 1 und 2 als gepanzertes Fahrzeug in Form eines Kampfpanzers ausgebildet ist. Das Fahrzeug 01 soll dabei nicht nur Umweltgeräusche aus der Umgebung des Fahrzeugs 01 in den Fahrzeuginnenraum 14 übertragen, sondern soll mittels entsprechender Vorrichtungsmerkmale auch die Klassifizierung von Objekten auf der Basis akustischer Signale ermöglichen. In der Fig. 6 sind daher die bereits mit Bezug auf die Fig. 1 beschriebenen Merkmale des Fahrzeugs 01 weitestgehend nicht mehr aufgeführt. Viel mehr handelt es sich bei den Merkmalen der Fig. 6 um die zusätzlichen Merkmale zur Klassifikation von Objekten.

Das militärische Fahrzeug 01 umfasst dabei ein Fahrgestell 02, einen Turm 03 sowie einen dem Turm 03 mit dem Fahrgestell 02 verbindende Wanne 04. Auf der Außenkontur 06 des militärischen Fahrzeugs 01 sind vier erste Mikrofone 05.1 angeordnet, die an den äußeren Ecken des Fahrgestells 02 auf der Außenkontur 06 des militärischen Fahrzeugs 01 angeordnet sind. Die vier ersten Mikrofone 05.1 sind dabei Teil einer akustischen Empfangseinrichtung 29.

Die Empfangseinrichtung 29 umfasst zudem ein Störgeräusch-Mikrofon 05.2, welches im Bereich eines in der Fig. 6 nicht dargestellten Triebwerks des militärischen Fahrzeugs 01 angeordnet ist und dazu ausgebildet ist, Schallwellen zu empfangen, die vom militärischen Fahrzeug 01 selbst erzeugt werden. Außerdem umfasst die Empfangseinrichtung 29 ein Boden-Mikrofon 05.3, welches dazu ausgebildet ist, Schallwellen zu empfangen, die über einen Boden 33 übertragen werden, auf dem sich das Fahrzeug 01 befindet. Im Gegensatz dazu sind die auf der Außenkontur 06 des Fahrzeugs 01 angeordneten ersten Mikrofone 05.1 dazu ausgebildet, Schallwellen aus einer das Fahrzeug 01 umgebenden Atmosphäre 35 zu empfangen.

Durch die Anordnung der ersten Mikrofone 05.1 an den Ecken des Fahrgestells 02 des Fahrzeugs 01 wird erreicht, dass die ersten Mikrofone 05.1 maximal voneinander beabstandet sind. Die ersten Mikrofone 05.1, das Störgeräusch-Mikrofon 05.2 sowie das Boden-Mikrofon 05.3 sind über entsprechende Empfangsleitungen 08 mit einer Klassifizierungseinrichtung 34 verbunden, welche zur Klassifizierung von Objekten durch eine Analyse der mit der Empfangseinrichtung 29 empfangenen akustischen Signale eingerichtet ist. Darüber hinaus umfasst das militärische Fahrzeug 01 eine Auswerteeinrichtung 29, die die mit der zumindest einen Empfangseinrichtung 29 empfangenen Signale aufbereitet, insbesondere filtert. Im Beispiel der Fig. 6 ist die Auswerteeinrichtung 29 als Teil der Klassifizierungseinrichtung 34 ausgebildet. Es kann jedoch auch eine alternative Anordnung oder Ausgestaltung der Auswerteeinrichtung 29 realisiert werden. Die Aufbereitung der Signale durch die Auswerteeinrichtung 29 erfolgt dabei bevorzugt vor einer Klassifizierung durch die Klassifizierungseinrichtung 34.

Außerdem umfasst das Fahrzeug 01 ein Objektortungsmittel 31 auf, mit dem Objekte durch eine Analyse der mit der zumindest einen Empfangseinrichtung 29 empfangenen akustischen Signale geordnet werden können. Im Beispiel der Fig. 6 ist das Objektortungsmittel 31 ebenfalls als Teil der Klassifizierungseinrichtung 34 ausgebildet, ohne dass diese Ausgestaltung notwendig ist. Außerdem umfasst das Fahrzeug 01 eine akustische Signaturdatenbank 32, welche charakteristische akustische Signaturen von zu klassifizierenden Objekten umfasst. Weiter umfasst das militärische Fahrzeug 01 zwei Sichteinrichtungen 17.1 und 17.2. Die erste Sichteinrichtung 17.1 ist als direkte Sichteinrichtung im Turm 03 des militärischen Fahrzeugs 01 ausgebildet. Die zweite Sichteinrichtung 17.2 ist als indirekte Sichteinrichtung ausgebildet, was bedeutet, dass die zweite Sichteinrichtung 17.2 einen Teil der Umgebung 13 um das militärische Fahrzeug 01 über eine Anzeigeeinheit 27 einem Fahrzeuginsassen 12 zur Anzeige bringt. Die zweite Sichteinrichtung 17.2 kann beispielsweise als beweglicher Sensorträger ausgebildet sein, der optische Signale der Umgebung 13 des militärischen Fahrzeugs 01 in verschiedenen Wellenlängenbereichen über entsprechende Sensoren erfasst und weiterverarbeitet.

Sowohl die erste Sichteinrichtung 17.1 als auch die zweite Sichteinrichtung 17.2 können ihrerseits mit einem Ausgang der Klassifizierungseinrichtung 34 verbunden sein. Dadurch wird ermöglicht, dass über die Anzeigeeinheit 27 oder unmittelbar über die Sichteinrichtung 17.1 eine überlagerte Ausgabe erfolgt, die einerseits eine grafische Ausgabe von mit der akustischen Klassifizierungseinrichtung 34 klassifizierten Objekten und andererseits eine Ausgabe oder Darstellung der das militärische Fahrzeug 01 umgebenden Umgebung 13, wie sie von den Sichteinrichtungen 17.1 und 17.2 des Fahrzeugs 01 erfasst werden, dargestellt wird.

### Bezugszeichen:

- 01: Fahrzeug
- 02: Fahrgestell
- 03: Turm
- 04: Wanne
- 05: Mikrofon
- 05.2: Störgeräusch-Mikrofon
- 05.3: Boden-Mikrofon
- 06: Außenkontur
- 07: Signalverarbeitungseinheit
- 08: Empfangsleitung
- 09: Lautsprecher
- 10: Kopfhörer
- 11: Ausgabeeinheit
- 11.1: linke Ausgabeeinheit
- 11.2: rechte Ausgabeeinheit
- 12: Fahrzeuginsasse
- 12.1: erster Fahrzeuginsasse
- 12.2: zweiter Fahrzeuginsasse
- 12.3: Militärkraftfahrer
- 12.4: Richtschütze
- 12.5: Kommandant
- 13: Umgebung
- 14: Fahrzeuginnenraum
- 14.1: vorderer Bereich
- 14.2: hinterer Bereich
- 15: Sprachmikrofon
- 16: Kommunikationsschnittstelle
- 17: Sichteinrichtung
- 17.1: erste Sichteinrichtung
- 17.2: zweite Sichteinrichtung
- 19: Empfangsleitung
- 20: Verstärker
- 21: Analyseeinheit
- 22: Steuereinheit
- 23: Sensorik
- 24: Luke
- 25: Empfangsbereich
- 26: Infanterietrupp
- 27: Anzeigeeinheit
- 28: Endstufe
- 29: Empfangseinrichtung
- 30: Auswerteeinrichtung
- 31: Objektortungsmittel
- 32: Signaturdatenbank
- 33: Boden
- 34: Klassifizierungseinrichtung
- 35: Atmosphäre
- P1: Richtung/Punkt
- R: Rotationsachse

## Patentansprüche

1. Fahrzeug mit einem Fahrzeuginnenraum (14), mit mindestens zwei Mikrofonen (05) zum Empfang von Umweltgeräuschen und zumindest einem Lautsprecher (09) zur Übertragung von Umweltgeräuschen aus der Umgebung (13) des Fahrzeugs (01) in den Fahrzeuginnenraum (14),
**gekennzeichnet durch** eine Wanne (04) und einen gegenüber der Wanne (04) drehbar gelagerten Turm (03), wobei der Lautsprecher (09) am Turm (03) und die Mikrofone (05) an der Wanne (04) angeordnet sind und wobei der Lautsprecher (09) und die Mikrofone (05) derart eingerichtet sind, dass bei der lagerichtigen Übertragung die Stellung des Turms (03) gegenüber der Wanne (04) berücksichtigt wird, wobei der Lautsprecher (09) zwei Ausgabeeinheiten (11.1, 11.2) aufweist.

2. Fahrzeug nach Anspruch 1,
**dadurch gekennzeichnet,**
**dass** die mindestens zwei Mikrofone (05) und der zumindest eine Lautsprecher (09) zur lagerichtigen Übertragung von Umweltgeräuschen in den Fahrzeuginnenraum (14) eingerichtet sind.

3. Fahrzeug nach Anspruch 1 oder 2,
**gekennzeichnet durch**
zumindest ein Störgeräusch-Mikrofon (18) zum Empfang von Fahrzeuggeräuschen des Fahrzeugs (01) und/oder anderen Störgeräuschen.

4. Fahrzeug nach einem der Ansprüche 1 bis 3,
**dadurch gekennzeichnet,**
**dass** der zumindest eine Lautsprecher (09) beweglich gegenüber Teilen des Fahrzeugs (01) ausgebildet ist.

5. Fahrzeug nach Anspruch 4,
**dadurch gekennzeichnet, dass** die Stellung des Lautsprechers (09) gegenüber Teilen des Fahrzeugzeugs (01) bei der lagerichtigen Übertragung berücksichtigt wird.

6. Fahrzeug nach Anspruch 4 oder 5,
**dadurch gekennzeichnet,**
**dass** der zumindest eine Lautsprecher (09) zusammen mit einem Kopf eines Fahrzeuginsassen (12) bewegbar ist.

7. Fahrzeug nach einem der Ansprüche 4 bis 6,
**gekennzeichnet durch**
einen Bewegungssensor zur Ermittlung der Bewegung eines Fahrzeuginsassen (12), insbesondere zur Ermittlung der Bewegung eines Kopfes eines Fahrzeuginsassen (12).

8. Fahrzeug nach einem der Ansprüche 4 bis 7,
**dadurch gekennzeichnet,**
**dass** der zumindest eine Lautsprecher (09) zusammen mit einer Sichteinrichtung (17.1) zur optischen Wahrnehmung von zumindest einem Teil der Umgebung (13) des Fahrzeuges bewegbar ist.

9. Fahrzeug nach einem der Ansprüche 1 bis 8,
**dadurch gekennzeichnet,**
**dass** zumindest ein Lautsprecher (09) Teil einer Fahrzeugverständigungsanlage ist.

10. Fahrzeug nach einem der Ansprüche 1 bis 9,
**gekennzeichnet durch**
eine Signalverarbeitungseinheit (07), die zur Verarbeitung von Signalen der mindestens zwei Mikrofone (05) in Abhängigkeit der Anordnung und/oder Ausrichtung des zumindest einen Lautsprechers (09) eingerichtet ist.

11. Fahrzeug nach einem der Ansprüche 4 bis 10,
**dadurch gekennzeichnet,**
**dass** die Signalverarbeitungseinheit (07) zur Signalverarbeitung in Abhängigkeit der Bewegung des zumindest einen Lautsprechers (09), eingerichtet ist.

12. Fahrzeug nach einem der Ansprüche 3 bis 11,
**dadurch gekennzeichnet,**
**dass** die Signalverarbeitungseinheit (07) zur Verarbeitung von Signalen von zumindest einem Störgeräusch-Mikrofon (18) eingerichtet ist.

13. Verfahren zur Geräuschübertragung in einen Fahrzeuginnenraum (14) eines Fahrzeugs (01),
wobei von mindestens zwei Mikrofonen (05) Umweltgeräusche empfangen und von zumindest einem Lautsprecher (09) Umweltgeräusche aus der Umgebung (13) des Fahrzeugs (01) in den Fahrzeuginnenraum (14) übertragen werden, **dadurch gekennzeichnet, dass** das Fahrzeug eine Wanne (04) und einen gegenüber der Wanne (04) drehbar gelagerten Turm (03) aufweist, wobei der Lautsprecher (09) am Turm (03) und die Mikrofone (05) an der Wanne (02) angeordnet sind und wobei der Lautsprecher (09) und die Mikrofone (05) derart eingerichtet sind, dass bei der lagerichtigen Übertragung die Stellung des Turms (03) gegenüber der Wanne (04) berücksichtigt wird, wobei der Lautsprecher (09) zwei Ausgabeeinheiten (11.1, 11.2) aufweist.

14. Verfahren nach Anspruch 13,
**dadurch gekennzeichnet, dass** das Fahrzeug (01) nach einem der Ansprüche 1 bis 12 ausgebildet ist.

## Claims

1. Vehicle with a vehicle interior (14), with at least two microphones (05) for receiving environmental sound and at least one loudspeaker (09) for transmitting environmental sound from the environment (13) of the vehicle (01) into the vehicle interior (14),
**characterized by** a hull (04) and a turret (03) that can be rotated relative to the hull (04), wherein the loudspeaker (09) is mounted on the turret (03) and the microphones (05) are mounted on the hull (04) and the loudspeaker (09) and the microphones (05) are set up in such a way that the position of the turret (03) relative to the hull (04) is taken into account for positionally correct transmission, wherein the loudspeaker (09) has two output units (11.1, 11.2).

2. Vehicle according to Claim 1, **characterized in that**, the at least two microphones (05) and the at least one loudspeaker (09) are set up for the positionally correct transmission of environmental sound into the vehicle interior (14).

3. Vehicle according to Claim 1 or 2,
**characterized by**
at least one background sound microphone (18) for receiving vehicle sound of the vehicle (01) and/or other background sound.

4. Vehicle according to any one of Claims 1 to 3, **characterized in that**,
the at least one loudspeaker (09) is designed to be movable relative to parts of the vehicle (01).

5. Vehicle according to Claim 4,
**characterized in that** the position of the loudspeaker (09) relative to parts of the vehicle (01) is taken into account for positionally correct transmission.

6. Vehicle according to Claim 4 or 5,
**characterized in that**,
the at least one loudspeaker (09) is movable together with a head of a vehicle occupant (12).

7. Vehicle according to any one of Claims 4 to 6,
**characterized by**
a motion sensor for determining the movement of a vehicle occupant (12), in particular for determining the movement of a head of a vehicle occupant (12).

8. Vehicle according to any one of Claims 4 to 7, **characterized in that**, the at least one loudspeaker (09) is movable together with a viewing device (17.1) for the optical perception of at least one part of the environment (13) of the vehicle.

9. Vehicle according to any one of Claims 1 to 8, **characterized in that**, at least one loudspeaker (09) is part of a vehicle communication system.

10. Vehicle according to any one of Claims 1 to 9,
**characterized by**
a signal processing unit (07) which is set up to process signals of the at least two microphones (05) depending on the arrangement and/or orientation of the at least one loudspeaker (09).

11. Vehicle according to any one of Claims 4 to 10, **characterized in that**, the signal processing unit (07) is set up for signal processing depending on the movement of the at least one loudspeaker (09).

12. Vehicle according to any one of Claims 3 to 11, **characterized in that**, the signal processing unit (07) is set up for processing signals of at least one background sound microphone (18).

13. Method for sound transmission into a vehicle interior (14) of a vehicle (01), wherein environmental sound is received from at least two microphones (05) and from at least one loudspeaker (09) and environmental sound from the environment (13) of the vehicle (01) is transmitted into the vehicle interior (14) **characterized in that** the vehicle has a hull (04) and a turret (03) which is rotatably mounted relative to the hull (04), wherein the loudspeakers (09) are arranged on the turret (03) and the microphones (05) are arranged on the hull (02) and the loudspeaker (09) and the microphones (05) are set up in such a way that the position of the turret (03) relative to the hull (04) is taken into account for positionally correct transmission, wherein the loudspeaker (09) has two output units (11.1, 11.2).

14. Method according to Claim 13,
**characterized in that** the vehicle (01) is designed according to any one of Claims 1 to 12.

## Revendications

1. Véhicule doté d'un habitacle de véhicule (14), comprenant au moins deux microphones (05) destinés à recevoir des bruits ambiants et au moins un haut-parleur (09) destiné à transmettre des bruits ambiants provenant de l'environnement (13) du véhicule (01) dans l'habitacle de véhicule (14), **caractérisé par** un creux (04) et une tour (03) montée de manière à pouvoir tourner par rapport au creux (04), dans lequel le haut-parleur (09) est disposé sur la tour (03) et les microphones (05) sont disposés sur le creux (04), et dans lequel le haut-parleur (09) et les microphones (05) sont conçus de manière à ce que la position de la tour (03) par rapport au creux (04) soit prise en compte lors de la transmission en position correcte, dans lequel le haut-parleur (09) comprenant deux unités de sortie (11.1, 11.2).

2. Véhicule selon la revendication 1,
**caractérisé en ce que** lesdits au moins deux microphones (05) et ledit au moins un haut-parleur (09) sont conçus pour transmettre des bruits ambiants dans l'habitacle de véhicule (14) en position correcte.

3. Véhicule selon la revendication 1 ou 2,
**caractérisé par** au moins un microphone de bruit parasite (18) destiné à recevoir des bruits de véhicule du véhicule (01) et/ou d'autres bruits parasites.

4. Véhicule selon l'une des revendications 1 à 3,
**caractérisé en ce que** ledit au moins un haut-parleur (09) est réalisé de manière mobile par rapport à des parties du véhicule (01).

5. Véhicule selon la revendication 4,
**caractérisé en ce que** la position du haut-parleur (09) par rapport à des parties du véhicule (01) est prise en compte lors de la transmission en position correcte.

6. Véhicule selon la revendication 4 ou 5,
**caractérisé en ce que** ledit au moins un haut-parleur (09) est mobile conjointement avec la tête d'un occupant du véhicule (12).

7. Véhicule selon l'une des revendications 4 à 6,
**caractérisé par** un capteur de mouvement destiné à déterminer le mouvement d'un occupant (12) du véhicule, en particulier à déterminer le mouvement de la tête d'un occupant (12) du véhicule.

8. Véhicule selon l'une des revendications 4 à 7,
**caractérisé en ce que** ledit au moins un haut-parleur (09) peut être déplacé conjointement avec un dispositif de visualisation (17.1) permettant une perception optique d'au moins une partie de l'environnement (13) du véhicule.

9. Véhicule selon l'une des revendications 1 à 8,
**caractérisé en ce qu'**au moins un haut-parleur (09) fait partie d'un système d'avertissement de véhicule.

10. Véhicule selon l'une des revendications 1 à 9,
**caractérisé par** une unité de traitement de signaux (07) qui est configurée pour traiter des signaux desdits au moins deux microphones (05) en fonction de la disposition et/ou de l'orientation dudit au moins un haut-parleur (09).

11. Véhicule selon l'une des revendications 4 à 10,
**caractérisé en ce que** l'unité de traitement de signaux (07) est configurée pour traiter des signaux en fonction du mouvement d'au moins un haut-parleur (09).

12. Véhicule selon l'une des revendications 3 à 11,
**caractérisé en ce que** l'unité de traitement de signaux (07) est conçue pour traiter des signaux provenant d'au moins un microphone de bruit parasite (18).

13. Procédé de transmission de bruit dans un habitacle de véhicule (14) d'un véhicule (01),
dans lequel des bruits ambiants sont reçus par au moins deux microphones (05) et des bruits ambiants provenant de l'environnement (13) du véhicule (01) sont transmis dans l'habitacle de véhicule (14) par au moins un haut-parleur (09), **caractérisé en ce que** le véhicule comporte un creux (04) et une tour (03) montée de manière à pouvoir tourner par rapport au creux (04), dans lequel le haut-parleur (09) est disposé sur la tour (03) et les microphones (05) sont disposés sur le creux (02) et dans lequel le haut-parleur (09) et les microphones (05) sont disposés de manière à ce que la position de la tour (03) par rapport au creux (04) soit prise en compte lors de la transmission en position correcte, dans lequel le haut-parleur (09) comprenant deux unités de sortie (11.1, 11.2).

14. Procédé selon la revendication 13, **caractérisé en ce que** le véhicule (01) est réalisé selon l'une des revendications 1 à 12.
